# EUROPEAN PATENT SPECIFICATION

(11) **EP 3 793 391 B1**
(45) Date of publication and mention of the grant of the patent: **05.07.2023**
(21) Application number: 19733219.0
(22) Date of filing: 17.05.2019
(51) Int. Cl.: A43D 95/12, B29C 35/04, B29C 51/42, B29D 35/12, A43B 23/02, A43B 23/08, B29D 35/00

(54) **SYSTEM AND METHODS FOR THERMOFORMING ARTICLES**
SYSTEM UND VERFAHREN ZUM THERMOFORMEN VON ARTIKELN
SYSTÈME ET PROCÉDÉS DE THERMOFORMAGE D'ARTICLES

(30) Priority: 18.05.2018 US 201862673564 P
(43) Date of publication of application: 24.03.2021
(73) Proprietor: Nike Innovate C.V., Beaverton, OR 97005 (US)
(72) Inventor: CHIEN, Tsung-Tai, 406 Taichung City (TW); HU, Meng-Chun, 406 Taichung City (TW); TSENG, I-Hsein, 406 Taichung City (TW); WANG, Guo-Chang, 406 Taichung City (TW)
(74) Representative: Müller-Boré & Partner Patentanwälte PartG mbB
(86) International application number: PCT/US2019/032958
(87) International publication number: WO 2019/222683

(56) References cited:
- EP-B1- 1 587 666
- WO-A1-2004/056228
- US-A1- 2002 079 617
- US-A1- 2017 368 735

## Description

### FIELD OF THE INVENTION

The present disclosure is directed to a system and methods for thermoforming articles.

### BACKGROUND OF THE INVENTION

Thermoforming an article can include heating the article above the article's melting temperature and then cooling the article below the article's melting temperature. In certain processes, during this heating and cooling, the article may be formed into a particular desired shape or structure.

US 2017/0368735 A1 describes methods of two-dimensionally and three-dimensionally forming an article of wear using vacuum forming in an automated process. In the two-dimensional method, the article of wear comprises a generally flat shape with three-dimensional features molded into the first material layer.

WO 2004/056228 A1 relates to a method for stretching an upper fitted on a last. A shoe upper-last assembly is firstly formed and then positioned in a first station where heating means, situated in the first chamber, are activated so as to "hit" the upper-last assembly with a flow of hot air. A vacuum source is activated for creation of a vacuum condition in the first chamber, in order to increase the leather porosity, and the a flow of steam is introduced in the first chamber to increase the percentage of humidity inside the first chamber. Then the heating means are deactivated and the vacuum condition is removed. The upper-last assembly in then moved to a second station, where heating and ventilation means, situated in the second drying chamber, create a movement of hot air hitting the upper-last assembly in order to dry the upper leather. The heating and ventilation means are then deactivated and the upper-last assembly is moved again to a third station, where a vacuum condition is created to eliminate a further quantity of humidity present in the leather, and bring the leather back to its natural humidity. Lastly, the vacuum condition in the third station is removed.

EP 1 587 666 B1 describes a method and a plant for twin-sheet thermoforming of fuel tanks. First and second sheets of thermoformable plastic material are separately fed along respective processing lines. The sheets are heated and gripped along their peripheral edges by a pneumatically actuate suction and vacuum holding device, for supporting the heated sheets in a substantially flat condition while they are moved towards a respective thermoforming station. Both the molds are disposed side by side with their open cavity facing upwards. After thermoforming of the plastic sheets, one of the molds is turned upside down onto the other mold, to overlap and weld superimposed sealing areas of the two thermoformed shells. Cooling of the molds and thermoformed tank may be performed on a side of the processing lines.

US 2002/079617 A1 relates to an apparatus for thermoforming a thermoplastic blank into a plastic container, having a cup-shaped main body with a radially extending flange. A blank holder is conveyed by a conveyor along a predetermined path of travel in a predetermined direction. During one circulation, a plurality of blanks are supplied by a blank feeder to the blank holder, a central portion of each blank is heated by direct contact with upper and lower heating boards of heating unit to preferably above a melting point of the blank material, then the heated portion is formed into the cup-shaped main body by a forming unit, then a peripheral portion is annealed by a flange annealing unit, and finally the product containers are removed from the blank holder by a pick-up unit. The vacant blank holder is returned to the blank feed station. An annular ridge or skirt flange may be formed, preferably at the flange annealing station. A half-notch may be formed from the top surface of the peripheral portion of the blank to a predetermined depth to improve peel-off property of a plastic film lid which is heat-sealed to the flange of the product container, located at a third predetermined location forward of the second predetermined location in the direction of travel of the blank holder along the path of travel thereof, for forming the heated central area of the blank into a predetermined cup shape of the main body of the container.

The objective of current invention is to improve the system and the method for thermal-forming articles of footwear. The objective is achieved by the independent claims and particular embodiments are specified in the dependent claims.

### BRIEF DESCRIPTION OF THE DRAWING

Illustrative aspects of the present invention are described in detail below with reference to the attached drawing figures, which are incorporated by reference herein and wherein:
FIG. 1 depicts a top perspective view of a thermoforming system having a heating station, and first, second, and third cooling stations, a loading/unloading station, and an article movement mechanism, in accordance with aspects hereof;
FIG. 2 depicts a top perspective view of the thermoforming system of FIG. 1, with a portion of the enclosure removed to reveal the heating station enclosure, in accordance with aspects hereof;
FIG. 3A depicts a close up side perspective view of a processing area of the first heating zone of the heating station, where the first processing area includes thermal elements and an air circulation device, in accordance with aspects hereof;
FIG. 3B depicts a close up side perspective view of a processing area of the second heating zone of the heating station, where the processing area includes an air circulation device, in accordance with aspects hereof;
FIG. 4 depicts a close up side view of a first cooling station, where the first cooling station includes one or more air inlets coupled to an air circulation device, in accordance with aspects hereof;
FIG. 5 depicts a close up side view of a second cooling station, where the second cooling station includes a moveable chamber, in accordance with aspects hereof;
FIG. 6 depicts a schematic top view of the thermoforming system of FIG. 1, particularly showing an article movement mechanism and a schematic representation of the heating station, the first, second, and third cooling stations, and the loading/unloading station, in accordance with aspects hereof;
FIG. 7A depicts a side view of an upper for an article of footwear, in accordance with aspects hereof;
FIG. 7B depicts a side perspective view of a last, in accordance with aspects hereof;
FIG. 7C depicts a top and side perspective view of a lasted upper, where the upper of FIG. 7A is positioned on the last of FIG. 7B, in accordance with aspects hereof;
FIG. 8A depicts a top and side perspective view of a compressive material, in accordance with aspects hereof;
FIG. 8B depicts a side perspective view of an assembly of the lasted upper of FIG. 7C positioned inside of the compressive material of FIG. 8A;
FIG. 9A depicts a top and side perspective view of the assembly of FIG. 8B positioned over the docking member of the article compression assembly, in accordance with aspects hereof;
FIG. 9B depicts a top and side perspective view of the assembly of FIG. 8B coupled to the docking member of the article compression assembly, in accordance with aspects hereof;
FIG. 9C depicts a top and side perspective view of the assembly of FIG. 8B positioned over a docking member, in accordance with aspects hereof;
FIG. 9D depicts a cross-section of the docking member and assembly along the cutline 9D depicted in FIG. 9C, in accordance with aspects hereof;
FIG. 9E depicts a top and side perspective view of the assembly of FIG. 8B positioned over a docking member, in accordance with aspects hereof;
FIG. 10A depicts a side view of an upper and a heel counter, in accordance with aspects hereof;
FIG. 10B depicts a side view of the heel counter of FIG. 10A positioned inside the upper of FIG. 10A, in accordance with aspects hereof;
FIG. 11 depicts a side and partial cutaway view of the heel counter and upper of FIG. 10B, in accordance with aspects hereof;
FIG. 12 depicts a side and partial cutaway view of the heel counter and upper of FIG. 10B where the upper is positioned on a last, and where a compressive material is positioned over the lasted upper, in accordance with aspects hereof;
FIG. 13 depicts a flow diagram of a method for thermoforming an article, in accordance with aspects hereof;
FIG. 14 depicts a flow diagram of a method for thermoforming an article, in accordance with aspects hereof
FIG. 15 depicts a flow diagram of a method for thermoforming an article, in accordance with aspects hereof
FIG. 16 depicts a flow diagram of a method for thermoforming an article, in accordance with aspects hereof; and
FIG. 17 depicts a flow diagram of a method for thermoforming an article, in accordance with aspects hereof.

### DETAILED DESCRIPTION OF THE INVENTION

The subject matter of aspects of the present invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies.

Aspects herein are directed to methods and systems for thermoforming articles. Certain thermoforming systems can include heating an article and then cooling the article, while the article is formed into a desired shape. Current thermoforming systems can be inefficient at least in one respect due to the varying processing times required for the various process steps. Further, certain current thermoforming systems can be resource-intensive regarding the space required for housing numerous thermoforming components.

The systems and methods disclosed herein can alleviate one or more of the above-mentioned problems. For instance, a thermoforming system is disclosed than can include a compact design that is capable of efficient processing throughput. As discussed below, in certain aspects, the system disclosed herein can include a heating station having more than one heating zone, a first cooling station, a second cooling station, and a third cooling station. In such an aspect, these stations can be positioned in a circumferential manner, with an article movement mechanism positioned to transfer an article from one station (or from one processing area) to the next. Further, as discussed below, in certain aspects, the article movement mechanism can transfer multiple articles at the same time, from one processing area or station to the next. In such aspects, the systems and methods described herein have been designed to allow for the same or similar processing times at each station or processing area in order to maximize efficiency and effectively utilize the circular layout, in one aspect. In certain aspects, as discussed further below, this results in the article movement mechanism transferring an article to more than one processing area in the same heating station, as the article may require exposure to thermal energy over a period of time longer than a period of time required for the article at another processing station, such as a first cooling station.

Further, in certain aspects, the system described herein is adapted to cool a heated article to a temperature where a bonding agent may effectively bond at least two components of the article together while the article is being exposed to a compressive force, which is supplied by a pressure above atmospheric pressure.

Accordingly, in one aspect a method for thermoforming an article is provided. The method includes receiving an article, and exposing the article to a first heating zone. In this aspect, the first heating zone includes one or more thermal elements and one or more first air circulation devices. Further in this aspect, the first heating zone is adapted to expose the article to a temperature in a range of 70 °C to 250 °C. The method includes exposing the article to a second heating zone. In this aspect, the second heating zone includes one or more second air circulation devices. Further in this aspect, the second heating zone is adapted to expose the article to a temperature in a range of 70 °C to 250 °C. In this aspect the method also includes, subsequent to exposing the article to the second heating zone, exposing the article to a first cooling station. In this aspect, the first cooling station includes one or more third air circulation devices. Further in this aspect, the first cooling station is adapted to reduce a temperature of at least a portion of the article to a range of 40 °C to 90 °C. Also in this aspect the method includes, subsequent to exposing the article to the first cooling station, exposing the article to a second cooling station. The second cooling station comprises a chamber, wherein the chamber exposes the article to a pressure greater than atmospheric pressure.

In yet another aspect, a system for thermoforming an article is provided. The system includes a heating station that is at least partially enclosed. In this aspect, the heating station includes a first heating zone and a second heating zone, the second heating zone being in fluid communication with the first heating zone. Further in this aspect, the first heating zone includes one or more thermal energy elements and one or more first air circulation devices. In this aspect, the second heating zone includes one or more second air circulation devices. In this aspect, at least the first heating zone is adapted to expose at least one article to a temperature in a range of 70 °C to 250 °C. Further, in this aspect, the system also includes a first cooling station that includes one or more third air circulation devices, with the first cooling station being exposed to atmospheric pressure. In this aspect, the system also includes a second cooling station, the second cooling station including a chamber adapted to expose the at least one article to a pressure above atmospheric pressure. Further in this aspect, the system includes an article movement mechanism that is adapted to transfer the at least one article from the heating station to the first cooling station, and is further adapted to transfer the at least one article from the first cooling station to the second cooling station.

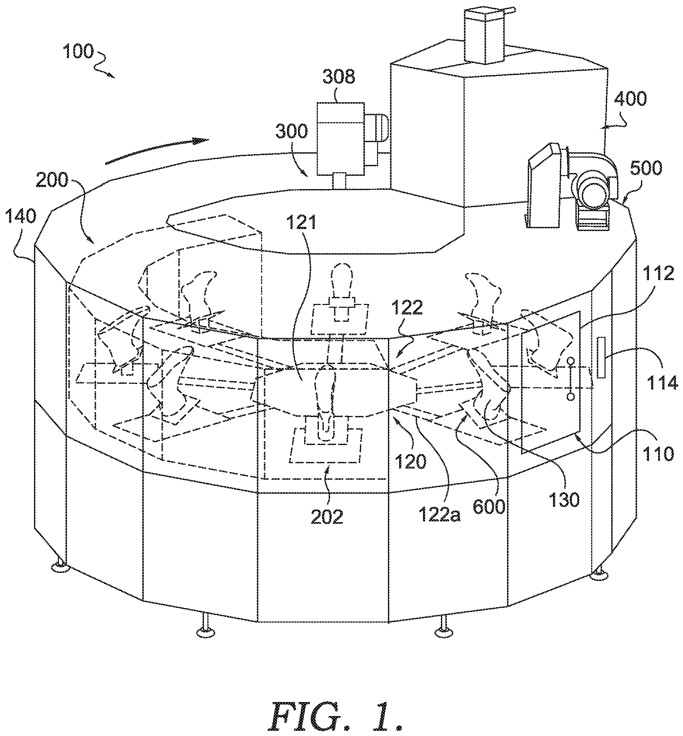

Turning now to the Figures, FIG. 1 depicts a system 100 for thermoforming one or more articles. FIG. 1 depicts the article, e.g., the article 130, as at least a portion of an article of footwear, e.g., an upper. It should be understood that the system and methods disclosed herein can be utilized on many different types of articles or portions of articles and the article 130 depicted herein is just one example contemplated for use in the system and methods disclosed herein.

In various aspects, the system 100 of FIG. 1 includes a heating station 200, a first cooling station 300, a second cooling station 400, a third cooling station 500, a loading/unloading station 110, and an article movement mechanism 120. In certain aspects, such as that depicted in the system 100 of FIG. 1, the system 100 can include an enclosure 140.

In the aspect depicted in FIG. 1, the heating station 200, the first cooling station 300, the second cooling station 400, the third cooling station 500, and the loading/unloading station 110 are positioned in a circumferential manner relative to the center 121 of the article movement mechanism 120. In certain aspects, this circumferential positioning of the various stations of the system 100 can provide an efficient minimized footprint for the system 100.

In aspects, the article movement mechanism 120 is adapted to shift one or more articles from one station or processing area to another. In such aspects, the article movement mechanism 120 can include a plurality of radially extending members 122, with each shifting or rotating one or more articles between the various stations or processing areas of the system 100. For example, the radially extending member 122a can shift an article 130 from the loading/unloading station 110 to a processing area 202 of the heating station 200. In various aspects, the article movement mechanism 120 can shift one or more articles while the articles are each coupled to an article compression assembly 600. The article compression assembly 600 is discussed in further detail below.

In certain aspects, the article movement mechanism 120 can shift one or more articles from one station to another in a concerted manner. For instance, in aspects, the radially extending members 122 can be fixedly coupled to the center portion 121 so that the rotation of the article movement mechanism 120 causes the simultaneous movement of each member, and article coupled thereto, to an adjacent station or processing area. In one aspect, the system 100 is adapted to effectively process or thermoform an article in discrete, similarly timed steps. The timing of the individual processes occurring at each station or processing area of the system is discussed in further detail below.

In certain aspects, the use of the system can begin with the loading/unloading station 110, where an article, e.g., the article 130, enters the system 100. In certain aspects, a door 112 can be present at the loading/unloading station 110 to allow for entry and/or removal of an article. In the same or alternative aspects, a control panel 114 can be coupled to the enclosure 140 for manipulation of various system processes.

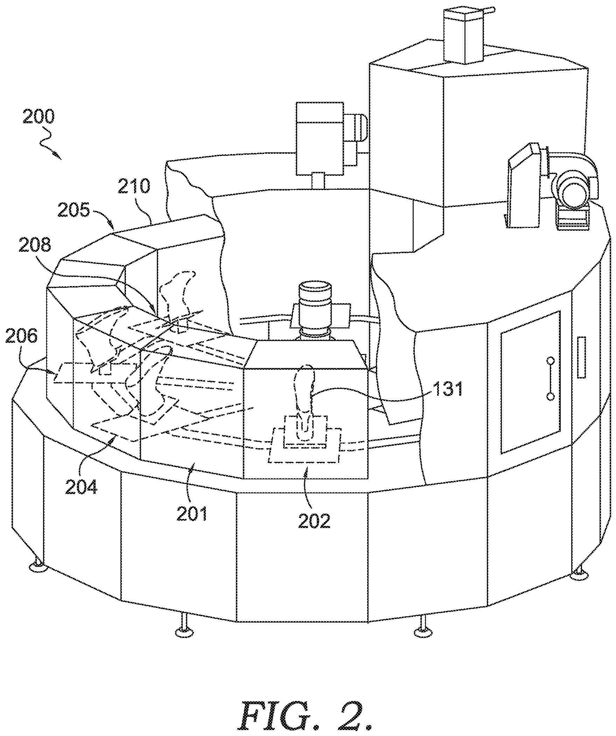

Turning now to FIGS. 2-4, the heating station 200 is depicted in further detail. As can best be seen in FIG. 2, the heating station 200 can include a heating station enclosure 210. The heating station enclosure 210, in certain aspects, can provide an at least partially enclosed environment that can aid in maintaining an elevated temperature inside the heating station enclosure 210. Further, as discussed below, since in aspects, the heating station 200 can include one or more air circulation devices, the heating station enclosure 210 can provide an enclosed environment for the one or more air circulation devices to distribute the heat throughout the heating station 200 or a processing area thereof.

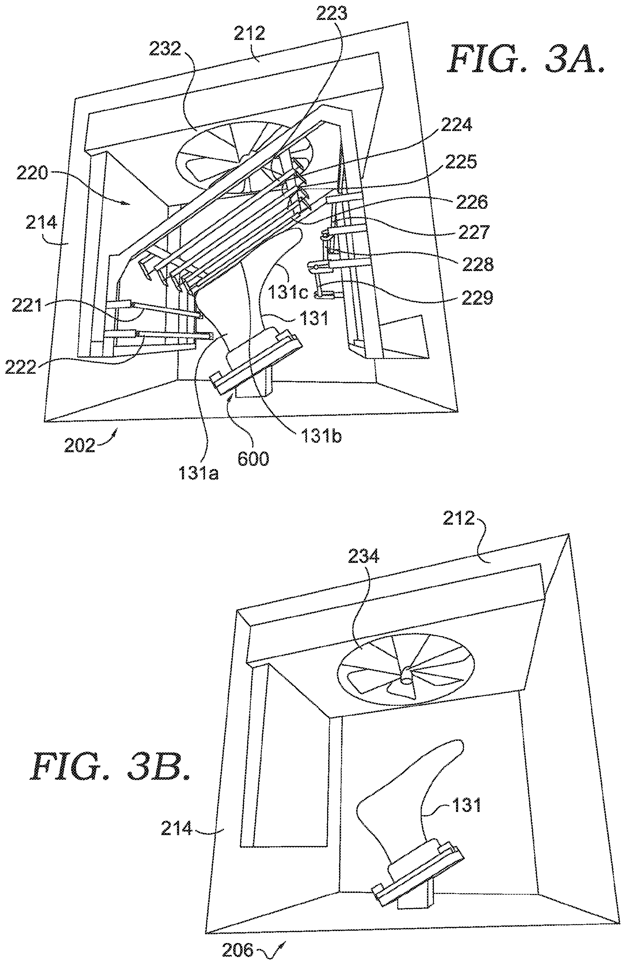

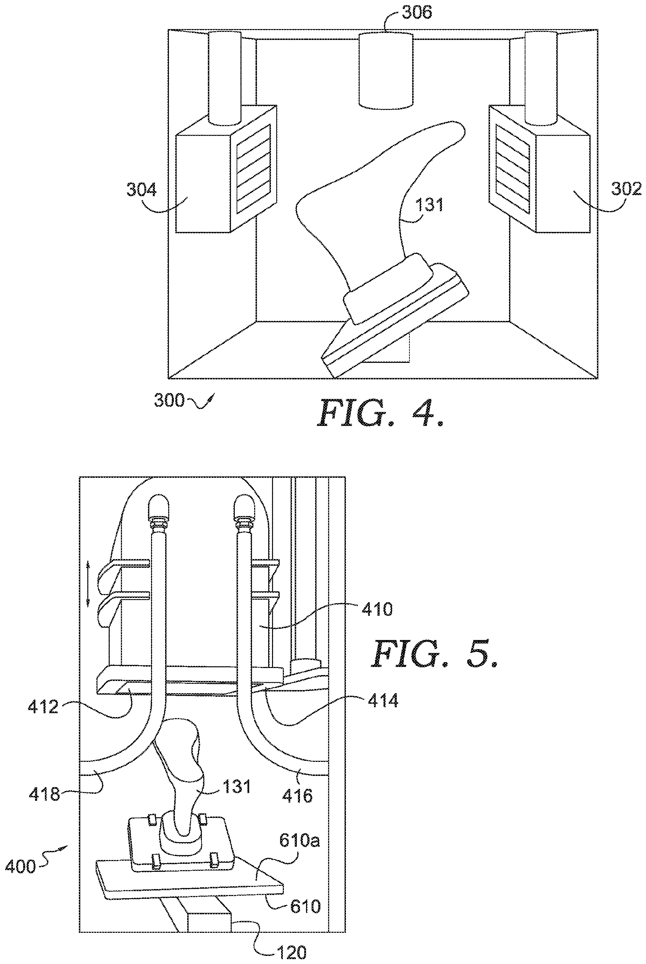

It should be understood that the heating station 200 depicted in FIG. 2 is schematically represented to highlight the various processing areas and heating station enclosure 210. In this regard, elements that may be positioned within the heating station 200 have been removed from the schematic representation provided in FIG. 2. Particular elements that may be found inside the heating station 200, in various aspects, are discussed in detail below with respect to FIGS. 3 and 4.

The heating station 200 depicted in FIG. 2 can include, in one or more aspects, two heating zones, such as heating zone 201 and heating zone 205. In certain aspects, the two heating zones 201 and 205 can be in fluid communication with one another. In one aspect, the heating station 200 can be described as a tunnel oven or heating tunnel. As discuss further below, the two heating zones 201 and 205 can include different elements or features. For example, in one aspect, the heating zone 201 may include one or more thermal elements and one or more air circulation devices that in certain aspects may facilitate the efficient ramping up of the processing temperature. Further in this example, the heating zone 205 may include one or more air circulation devices in the absence of a thermal element that, in certain aspects, may provide a constant, or relatively constant, temperature profile for the effective processing of the article.

In certain aspects, the bipartite organization of the heating station 200, e.g., heating zones 201 and 205 with different functional components, can facilitate the efficient processing of an article. For example, in certain aspects, the heating zone 201 having one or more thermal elements can expose over a short time, e.g., less than 150 seconds, the article to a temperature at which at least a portion of the article material will melt or deform. Further, in such aspects, the heating zone 205, which may have one or more air circulation devices in the absence of thermal elements, may facilitate the conduction of thermal energy to the inner portions of the heated article to allow one or more of these inner portions to melt or deform, as desired, while not exposing the outer portions of the article or other article portions to the potentially elevated temperatures of the heating zone 201 for an over-extended time period. The specific processing timing of the heating station 200 and the system 100 as a whole is discussed further below.

As can be seen in the aspect depicted in FIG. 2, the heating station 200 includes four distinct processing areas: 202; 204; 206; and 208, with two processing areas per heating zone. For example, the heating zone 201 can include the processing areas 202 and 204, while the heating zone 205 can include the processing areas 206 and 208. In operation, an article, e.g., an article 131, may enter the heating station 200 from the loading/unloading station 110, and transfer to the processing area 202 for a specified period of time, then transfer, e.g., in order, to the processing areas 204, 206, and 208 for specified time periods at each area.

FIG. 3A depicts the processing area 202 of the heating zone 201. While the processing area 202 is described, it should be understood that the foregoing description can also apply to the processing area 204 of the heating zone 201. As can be seen in FIG. 3A, the article 131 is positioned on an article compression assembly 600, which is discussed in further detail below.

In certain aspects, the processing area 202 can include a plurality of thermal elements 220. As can be seen in the aspect depicted in FIG. 3A, the plurality of thermal elements 220 can be positioned on more than one side of the article 131, which may facilitate the efficient and even heating of more than one side of the article 131. For instance, the thermal elements 221 and 222 can be positioned adjacent the heel area 131a of the article 131, the thermal elements 223, 224, 225, and 226 can be positioned adjacent to the ground-facing area 131b of the article 131, and the thermal elements 227, 228, and 229 can be positioned adjacent to the forefoot area 131c of the article 131. It should be appreciated that the number of thermal elements depicted in FIG. 3A is just one example, and other arrangements or number of thermal elements are contemplated for use in the system 100. Further, the plurality of thermal elements 220 of FIG. 3A are depicted as infra-red (IR) lamps. It should be understood that other types of thermal elements are also contemplated for use in the system 100.

In various aspects, as discussed above, the heating zone 201 can be adapted to expose an article, e.g., the article 131, to a temperature at which at least a portion of the material of the article would melt or deform. In certain aspects, the heating zone 201 and/or the heating station 200 is adapted to expose an article, e.g., the article 131, to a temperature in a range of from about 70 °C to about 250 °C. In certain aspects, the heating zone 201 and/or the heating station 200 is adapted to expose an article, e.g., the article 131, to a temperature in the range of from about 90 °C to about 220 °C. In one or more aspects, the heating zone 201 and/or the heating station 200 is adapted to expose an article, e.g., the article 131, to a temperature in the range of from about 110 °C to about 180 °C. In various aspects, the heating zone 201 is adapted to increase the temperature of at least a portion of the article to the temperature ranges discussed in this paragraph. In certain aspects, the heating zone 201 of FIG. 3A is adapted to increase the temperature inside the heating zone 201 and/or the heating station 200 from about 25 °C to about 200 ° C in less than or equal to 10 seconds.

The processing area 202 of the heating zone 201 depicted in FIG. 3A can also include an air circulation device 232, which may circulate air to more evenly distribute thermal energy, e.g., heat generated by the plurality of thermal elements 220. As can be seen in the aspect depicted in FIG. 3A, the air circulation device 232 is positioned at or adjacent the top portion 212 of the heating station enclosure 210. It should be understood that the air circulation device 232 can be positioned differently than that depicted in FIG. 3A, such as on a sidewall 214 of the heating station enclosure 210. In aspects, the air circulation device 232 can be any type of mechanical ventilation device, such as a fan.

As discussed above, in certain aspects, the heating zone 201 can include two processing areas 202 and 204. In such an aspect, an article, e.g., the article 131 can be exposed to the processing area 202, such as that depicted in FIG. 3A for a specified time period and then be shifted to the processing area 204, which may also include thermal elements and an air circulation device, such as those depicted in the processing area 202 of FIG. 3A.

Turning now to FIG. 3B, the processing area 206 of the heating zone 205 is depicted. In certain aspects, as discussed above, an article, such as article 131, can be conveyed from the heating zone 201 to the processing area 206 of the heating zone 205, e.g., by the article movement mechanism 120. As discussed above, the heating zone 205 can include one or more air circulation devices, such as the air circulation device 234. As can be seen in the aspect depicted in FIG. 3B, the air circulation device 234 is positioned at or adjacent the top portion 212 of the heating station enclosure 210. It should be understood that the air circulation device 234 can be positioned differently than that depicted in FIG. 3B, such as on a sidewall 214 of the heating station enclosure 210. In aspects, the air circulation device 234 can be any type of mechanical ventilation device, such as a fan.

As discussed above, in various aspects, the heating zone 205, and the processing areas 206 and 208, may not include a thermal element, such as the IR lamps discussed above with respect to the heating zone 201. In various aspects, the processing area 206 can provide externally heated air for circulation in the heating zone 205 that is different that the heated air originating from the thermal elements associated with the heating zone 201. In certain aspects, such heated air can be transported into the processing area 206, via the air circulation device 234, or via an inlet into the processing area 206, which is not depicted in the figures.

In aspects, the processing area 206 may expose an article to a temperature in the range of from about 70 °C to about 250 °C, about 90 °C to about 220 °C, or about 110 °C to about 180 °C. In various aspects, the heating zone 205 is adapted to increase or maintain the temperature of at least a portion of the article, e.g., the article 131, to the temperature ranges discussed in this paragraph. In aspects, the processing area 206 may expose the article to a temperature below the temperature of the heating zone 201, but such a temperature may still be above a melting temperature, Vicat softening temperature, heat deflection temperature, or a combination thereof of a material of the article. In the same or alternative aspects, the processing area 206 may maintain the temperature of the article that was obtained from exposure to the heating zone 201. In various aspects, the processing area 206 is adapted to increase the temperature of the processing area 206 from about 25 °C to about 250 °C over a period of about 30 minutes or less.

The melting temperature can be determined according to the test method detailed in ASTM D7138 - 16. The Vicat softening temperature can be determined according to the test method detailed in ASTM D1525-09, preferably using Load A and Rate A. The heat deflection temperature can be determined according to the test method detailed in ASTM D648-16, using a 0.455 MPa applied stress.

It should be understood that while the processing area 206 of the heating zone 205 is discussed above, the same or similar features of the processing area 206 can be present in the processing area 208 of the heating zone 205.

Turning now to FIG. 4, the first cooling station 300 of the system 100 is depicted. The first cooling station 300 can include one or more air circulation devices. For example, the cooling station 300 depicted in FIG. 3 can include one or more inlets 302, 304, and 306 for circulating ambient temperature air, e.g., about 20 °C to about 28 °C, into the first cooling station 300. In such an aspect, as best seen in FIG. 1, the air circulation device 308 may be coupled to the enclosure 140 of the system 100 to provide ambient temperature air to the cooling station 300. In one aspect, the first cooling station 300 can circulate cooled air, e.g., air less than room temperature, to aid in the cooling of the article. It should be understood that the first cooling station 300 is just one example of a cooling station and other types of cooling stations or air circulation devices are also contemplated for use in the system and methods described herein.

In aspects, the first cooling station 300 is adapted to reduce the temperature of the article to a temperature in the range of from about 40 °C to about 90 °C, or from about 50 °C to about 80 °C, or from about 55 °C to about 75 °C, or about 120 °C or less. In such an aspect, the first cooling station 300 can reduce the temperature of the article to a temperature in the range of from about 40 °C to about 90 °C, or from about 50 °C to about 80 °C, or from about 55 °C to about 75 °C in less than about 120 seconds, less than about 100 seconds, or less than about 75 seconds.

In certain aspects, as discussed further below, the system 100 can include a third cooling station 500. In such aspects, the third cooling station 500 can include any or all of the components and related properties of the first cooling station 300 discussed with reference to FIG. 4.

FIG. 5 depicts the second cooling station 400. The article 131, can be transferred from the first cooling station 300 to the second cooling station 400, e.g., via the article movement mechanism 120.

The second cooling station 400 depicted in FIG. 5 is adapted to expose the article, e.g., the article 131, to a pressure above atmospheric pressure. In certain aspects, the second cooling station 400 can expose the article 131 to a pressure of from about 100 kPa to about 500 kPa, about 110 kPa to about 400 kPa, or about 120 kPa to about 300 kPa. The increased pressure provides additional compressive force on the article 131 to facilitate the forming of the article 131 around a forming material, and/or to facilitate effective bonding of one component of the article 131 to another component.

Such as that depicted in FIG. 5, the second cooling station 400 can include a moveable chamber 410 for sealing the article 131 in an interior portion 412. The moveable chamber 410 can shift from an open position, such as that depicted in FIG. 5 to a sealed position, not depicted in the figures. The moveable chamber 410 can shift vertically towards and away from an article positioned at the second cooling station 400. The moveable chamber 410 can vertically shift using any conventional mechanical movement mechanisms known to one skilled in the art. In various aspects, in the open position, the moveable chamber 410 is positioned above and away from the article 131 so that the article 131 is not positioned in the interior portion 412. In certain aspects, in the sealed position, a sealing portion 414 located at the bottom of the moveable chamber 410 contacts a surface 610a of the coupling platform 610 of the article compression assembly 600. The compression assembly 600 and the coupling platform 610 are discussed in detail below. The sealing portion 414 of the moveable chamber 410 can include any type of material that is adapted to form a temporary seal to allow for an increase in pressure in the interior portion 412 of the moveable chamber 410, such as an elastomeric material.

In various aspects, in order to increase the pressure above atmospheric pressure in the interior portion 412 of the moveable chamber 410, a gas, such as air can be pumped into the interior portion 412, e.g., via one or more lines 416 and 418. In such an aspect, the gas or air being pumped into the moveable chamber 410 may be cooled air, such as air that is in a temperature range of from about 0°C to about 25 °C, about 5 °C to about 20 °C, or about 15 ° C. In one aspect, the cooled air can be generated and pumped into the interior portion 412 of the moveable chamber 410 using conventional air cooling mechanisms.

In various aspects, the second cooling station 400 is adapted to maintain the temperature of the article 131 in a range of about 40 °C to about 90 °C, about 50 °C to about 80 °C, or about 55 °C to about 75 °C. In one or more aspects, the specific temperature range can be determined based on the activation of a bonding agent that may be employed in the formation of at least a portion of the article 131. In such an aspect, by maintaining the article 131, or a portion thereof, at a temperature in the range of an activation temperature of a bonding agent the further compressive force on the article 131 provided by the increased pressure can facilitate more effective and efficient bonding together of certain components of the article 131.

In various aspects, by maintaining the article 131, or a portion thereof, at a temperature in the above-mentioned ranges while exposing the article to elevated pressure, the portions of the article 131 that have melted or deformed during the processes described herein may better form into the shape of the forming material, as discussed further below. For instance, in one aspect, when the article 131 is an upper on a last, the elevated pressure can facilitate the forming of the upper into the shape of the last before the material in the upper or a portion thereof cools below a temperature at which it will no longer deform or melt.

In certain aspects, after the article 131 is exposed to the second cooling station 400, the article 131 can, optionally, be transferred to a third cooling station 500. In certain aspects, the third cooling station 500 can function similarly to the first cooling station 300 discussed above with respect to FIG. 4. For instance, as discussed above, the third cooling station 500 can include any or all of the features described above with respect to the first cooling station 400 of FIG. 4. In such an aspect, the article 131 can be exposed to one or more sources of moving air, in order to reduce the temperature of the article 131. In such aspects, like the first cooling station 400, the third cooling station 500 can include air inlets to circulate ambient temperature air, e.g., about 20 °C to about 28 °C, into the third cooling station 500. In certain aspects, the third cooling station 500 can be adapted to cool the article 131 to a temperature below that maintained in the second cooling station 400. For example, in one or more aspects, the third cooling station 500 can reduce the temperature of the upper to a temperature of less than about 90 °C, less than about 80 °C or less than about 70 °C. In certain aspects, the third cooling station 500 can reduce the temperature of the upper to a temperature in a range of from about 15 °C to about 90 °C, about 20 °C to about 65 °C , or about 20 °C to about 60 °C.

In aspects, once the article, e.g., the article 131, is exposed to the third cooling station 500 (or the second cooling station 400 in an aspect where there is not a third cooling station 500), the article 131 can be transferred to the loading/unloading station 110 for removal from the system 100 or for transfer to another processing system.

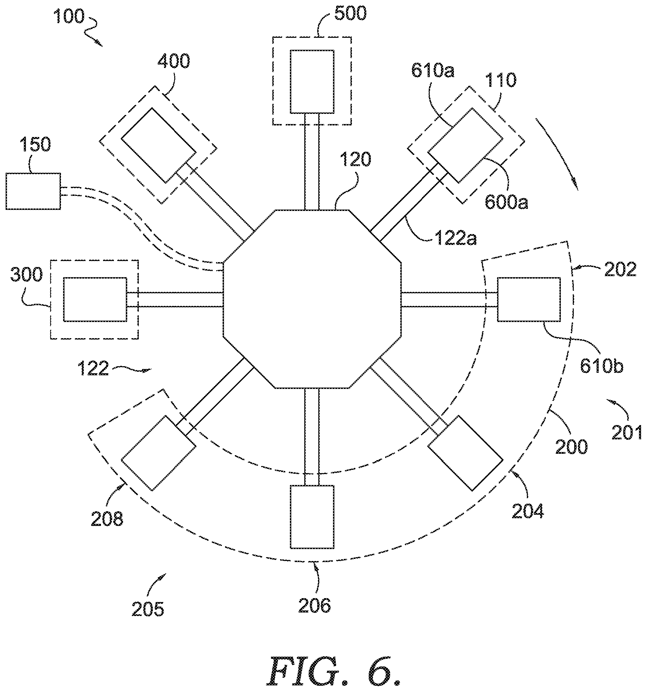

As discussed above, in certain aspects, the system 100 can provide a minimal footprint, while also providing an efficient thermoforming process. In one aspect, the circumferential position of the stations or components of the system 100 and/or the design of the article movement mechanism 120 can provide an efficient thermoforming process in a minimized footprint. For instance, in one aspect, the article movement mechanism 120 can facilitate the transfer of one or more articles from one station to another in a concerted manner, e.g., so that rotation of the article movement mechanism 120 causes the simultaneous movement of the article attached to each of the plurality of radially extending members 122. FIG. 6 depicts a top view schematic representation of the system 100 that can best illustrate these concepts.

As can be seen in FIG. 6, the article movement mechanism 120 can function as a rotary table, where the article movement mechanism 120 can include a plurality of radially extending members 122 (eight total in this example), with each coupled to a portion of a distinct article compression assembly. For example, the member 122a of the article movement mechanism 120 in FIG. 6 is depicted as associated or coupled to the coupling platform 610a of the article compression assembly 600a. In the aspect depicted in FIG. 6, the article movement mechanism 120 can rotate eight articles to different stations or processing areas simultaneously. In such an aspect, the article movement mechanism 120 can transfer each article to an adjacent station. For example, an article coupled to the coupling platform 610a can be transferred from the loading/unloading station 110 to the processing area 202 of the heating station 200, while an article coupled to the coupling platform 610b can be transferred from the processing area 202 to the processing area 204. In such an aspect, the system 100 and its processes can be adapted to allow for appropriate level of processing (e.g., heat or cold exposure) at specified time intervals that are applicable to each of the seven processing positions (with the eighth being the loading and unloading of an article).

In certain aspects, an article can spend a substantially similar time period (or the same time period) at each of the seven processing positions. In one aspect, an article is exposed to a specific processing position for a time period of from about 20 seconds to about 75 seconds, from about 30 seconds to about 60 seconds, or from about 45 seconds to about 55 seconds. For example, an article coupled to the coupling platform 610a can be transferred to the processing area 202 of the heating zone 201 for a time period of from about 20 seconds to about 75 seconds, then transferred to the processing area 204 of the heating zone 201 for a time period of from about 20 seconds to about 75 seconds. Further, in this example, the article can be transferred to the processing area 206 of the heating zone 205 for a time period of from about 20 seconds to about 75 seconds, and then on to the processing area 208 of the heating zone 205 for the same or similar time period. Further, still in this example, the article can then be transferred to the first cooling station 300 for a time period of from about 20 seconds to about 75 seconds, and then transferred to the second cooling station 400 for the same or similar time period. Yet further in this example, the article can then be transferred to the third cooling station 500 for a time period of from about 20 seconds to about 75 seconds prior to being transferred to the loading/unloading station 110. It should be understood that the time periods described herein are just one example set of time periods that can be utilized and other time periods that may be necessary for different processing needs are also contemplated by the present disclosure. Further, while the foregoing example design of the system 100 and its seven processing stations (with the eighth being the loading/unloading station 110) is described, other numbers of processing positions are also contemplated and within the scope of the present description.

In certain aspects where an article is exposed to each specific processing position for a time period of from about 20 seconds to about 75 seconds, this can translate to the article being present in the heating station 200 from about 80 to about 300 seconds. Further, in such an aspect, where an article is exposed to each specific processing position for a time period of from about 20 seconds to about 75 seconds, this can translate to the article being present in each of the heating zone 201 and the heating zone 205 for a time period of from 40 seconds to 150 seconds.

As discussed above, the article, e.g., the article 130 or 131, that is exposed to the system 100 for thermoforming may be assembled with a forming surface to allow the article or portion of an article to be at least partially formed into the shape of the forming surface through the exposure to the system 100 described herein. As just one example, the article 131 can be placed over a foot-shaped last so that the article 131, which can be a portion of an upper for an article of footwear, can be formed to the shape of the last through exposure to the system 100 and/or the processes described herein.

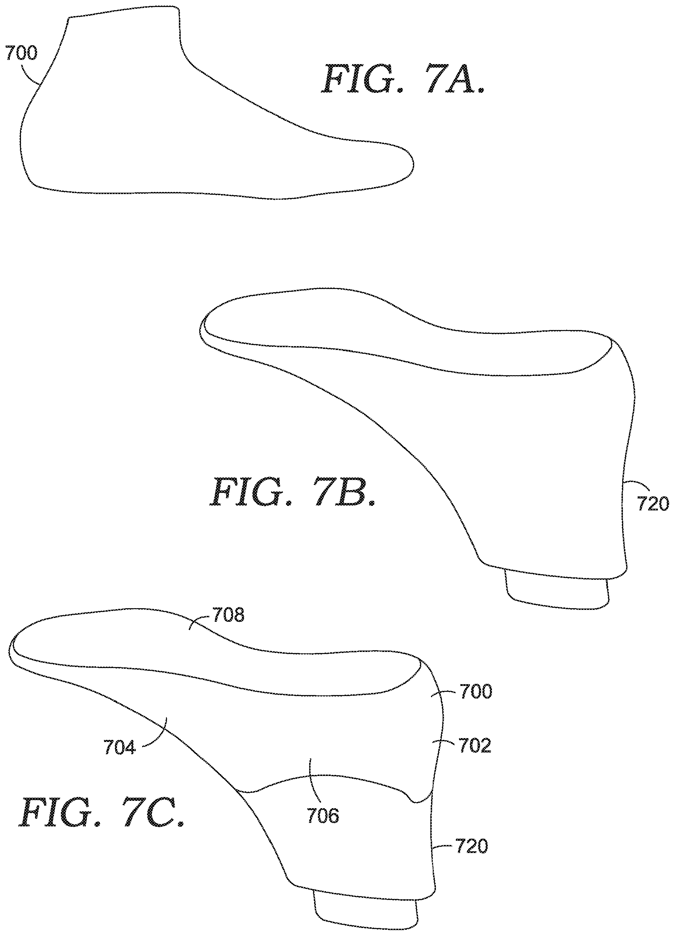

FIG. 7A depicts an example where the article can be an upper 700 for an article of footwear. In certain examples, the upper can include one or more materials for processing in the system 100 described herein. Stated differently, the upper 700 can include one or more thermoplastic materials that are desired to be thermoformed utilizing the processes and system 100 described herein. In aspects, the term thermoplastic material may also refer to a thermoplastic polymeric composition.

In one aspect, the upper 700 can include one or more yarns or fibers comprising a yarn or fiber composition that includes a thermoplastic material or a thermoplastic polymeric composition. In such aspects, the thermoplastic material, thermoplastic polymeric composition, and/or the yarn or fiber composition can exhibit a melting temperature Tₘ(or melting point), a Vicat softening temperature, a heat deflection temperature, or any combination thereof, that is from about 80° C to about 135° C, or from about 90° C to about 120° C. In one aspect, the thermoplastic material and/or the yarn or fiber composition can exhibit a melting temperature Tₘ, a Vicat softening temperature, a heat deflection temperature, or any combination thereof, that is about 135° C or less, about 125° C or less, or about 120° C or less. In the same or alternative aspects, the upper can include one or more materials that will not melt or deform under the processing conditions disclosed herein. In such an aspect, in the case of such a thermoplastic material or thermoplastic polymeric composition, such material can exhibit a melting temperature, a Vicat softening temperature, a heat deflection temperature, or any combination thereof, greater than about 135 °C, greater than about 140 °C, or greater than about 150 °C. Further, in such aspects, another material that may be present in the article, such as a material other than a thermoplastic material or thermoplastic polymeric composition, may not degrade below a temperature of about 150 °C, about 140 °C, or about 135 °C.

FIG. 7B depicts one example where the forming surface is a last 720. In aspects, the last 720 can include a conventional foot-shaped last, as long as such a last is capable of withstanding the temperatures and pressures of the process and system 100 described herein without deforming, melting, degrading, or cracking.

FIG. 7C depicts the upper 700 of FIG. 7A placed on the last 720. As can be seen in FIG. 7C, the example upper 700 is bootie-shaped in that it includes a heel portion 702, a forefoot portion 704, a collar portion 706, and a ground-facing portion 708. In various aspects, a thermoplastic material can be present in any or all of the immediately-mentioned portions of the upper 700 that is to be thermoformed in the processes and system 100 described herein. For instance, in one aspect, a thermoplastic material can be present in the ground-facing portion 708 that may form a portion of a ground-facing sole (mid-sole and/or outsole) of a completed article of footwear.

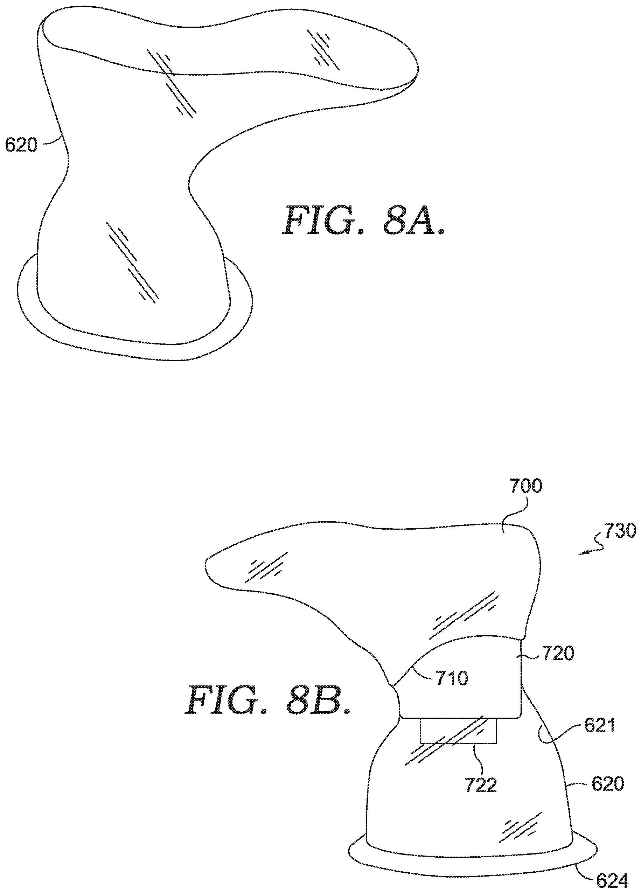

In order to aid in shaping the upper 700 to the forming surface of the last 720, in certain aspects, a compressive material can be utilized to apply a compressive force on the upper 700 and thereby press the upper 700 up against the rigid last 720 to aid in shaping the upper 700 during the processes and system 100 described herein. FIG. 8A depicts one example compressive material 620. The compressive material 620 can be one portion of the article compression assembly 600 that is discussed in more detail below.

As can be seen in the aspect depicted in FIG. 8A, the compressive material 620 is bootie-shaped in that the compressive material 620 is at least partly shaped similar to the last 720 and/or the upper 700. In such an aspect, utilizing a compressive material 620 that is shaped similar to the forming material, e.g., the last 720, can reduce any imperfections or creases that may result in the final thermoformed article. Stated differently, since the compressive material 620 and the upper 700 are substantially similarly shaped, the compression of the compressive material 620 onto the upper 700 may minimize any creasing or folds that may end up in the thermoformed upper 700 compared to the use of a compressive material 620 that is not similarly shaped to that of the upper 700 and/or the last 720.

In certain aspects, the compressive material 620 can be formed from any elastomeric material as long as the elastomeric material exhibits a melting temperature or degradation temperature that is at least 10 °C greater, or at least 20 °C or greater, than the processing temperatures described above with reference to the heating station 200. In one aspect, the compressive material 620 can include polysiloxane.

In certain aspects, the compressive material 620 is adapted to provide a thermoformed article having a desired optical property, such, as clarity, transparency, and/or haze. In certain aspects, these desired optical properties described herein can provide a thermoformed surface that can transmit incident light with minimal scattering and minimal absorption. In such an aspect, an inner surface of the compressive material 620, i.e., the surface that contacts the article when the article is placed inside the compressive material 620, can exhibit a certain surface roughness so as to not deleteriously affect one or more of these optical properties of the thermoformed article. For example, in one aspect, the inner surface of the compressive material 620 can exhibit an average surface roughness Ra of less than 50 nanometers, less than 30 nanometers, less than 1 nanometer, or less than 100 micrometers, as measured using an optical profilometer and calculated according to JIS B 0601-2001.

In certain aspects, the use of the compressive material 620 disclosed herein can impart a desired clarity on a least a portion of the surface of the thermoformed article. For instance, in certain aspects, the regular transmittance or clarity of at least a portion of the thermoformed article can be at least about 70 %, at least about 80 %, at least about 85 %, at least about 90 % or at least about 95 %, as measured in accordance with ASTM D1746 - 15. In the same or alternative aspects, the thermoformed article or at least a portion thereof can exhibit a haze value of less than about 30 %, less than about 25 %, less than about 20 %, less than about 15 %, less than about 10 %, or less than about 5 %, as measured according to ASTM D1003 - 13.

In one or more aspects, the compressive material 620 disclosed herein can provide a pattern or marking on an outer surface of the thermoformed article. For instance, an inner surface of the compressive material 620, i.e., the surface that contacts the article when the article is placed inside the compressive material 620, may include raised and/or recessed markings or patterns, which through the thermoforming process can imprint the markings or patterns onto at least a portion of the outer surface of the article. In one aspect, the raised or recessed markings and/or patterns can include the surface roughness properties discussed above so that the resulting embossed or imprinted pattern on the upper can exhibit one or more of the clarity and haze properties discussed above.

FIG. 8B depicts an assembly 730 of the compressive material 620 having been placed over the upper 700 and the last 720. As can be seen in the aspect depicted in FIG. 8B, the compressive material 620 forms tightly around the upper 700 present on the last 720. The elastomeric properties of the compressive material 620 can provide at least a first level of a compressive force on the upper 700 present on the last 720, e.g., due to the stretched configuration of the compressive material 620 when covering the upper 700 present on the last 720.

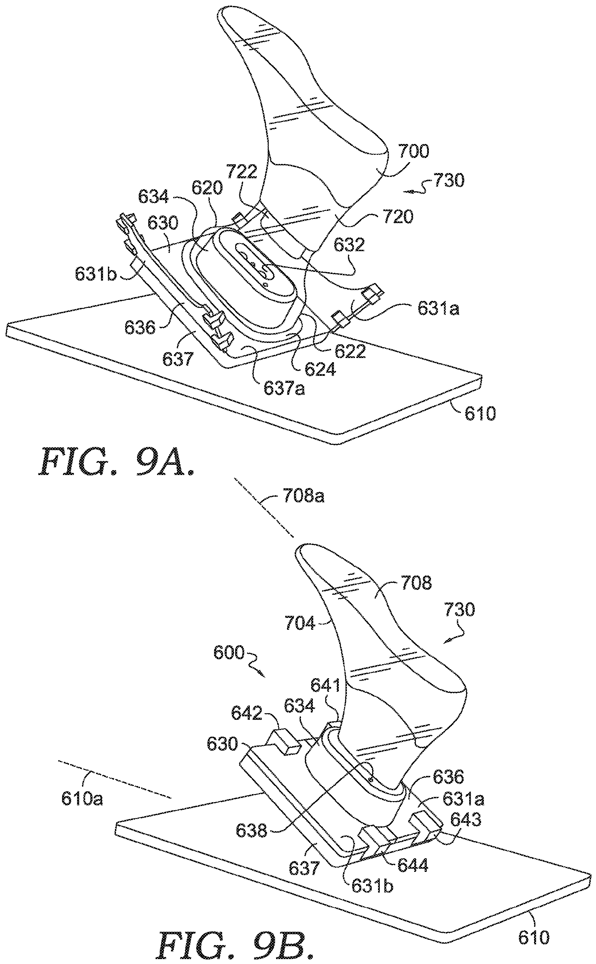

In certain aspects, the article compression assembly 600 discussed further below can provide an increased level of a compressive force on the upper 700 present on the last 720, e.g., by exposing the area between the inner surface 621 of the compressive material 620 and the outer surface 710 of the upper 700 to negative pressure. FIGS. 9A and 9B depict one example of a docking member 630 of the article compression assembly 600 that, when coupled to the assembly 730 of the compressive material 620 placed on the upper 700 and the last 720, can provide negative pressure to facilitate this increase level of compressive force on the upper 700. In aspects, the docking member 630 is coupled to the coupling platform 610, which as discussed above, is coupled one of the plurality of radially extending members 122 of the article movement mechanism 120.

As best seen in FIG. 9A, a protrusion 722 extending out from the last 720 can be inserted into a recess 632 of a collar 634 of the docking member 630 for coupling the assembly 730 of the compressive material 620 over the upper 700 and the last 720 to the docking member 630. Examples of a last protrusion can be a last extension that extends out from the last 720 that is separate but coupled to the last 720. In another aspect, such a last extension may be integral with the last 720. In certain aspects, a sealing portion 622 of the compressive material 620 extends out and away from the upper 700 and the last 720 and terminates into a flange 624. In aspects, the sealing portion 622 can cover the collar 634 of the docking member 630 while the flange 624 can contact a surface 637a of the bottom docking plate 637. Further, as can be seen in FIG. 9A, the upper docking plate 636 includes two shiftable portions 631a and 631b that can close down onto the bottom docking plate 637 thereby securing the flange 624 in between the bottom docking plate 637 and the top docking plate 636.

FIG. 9B best depicts the assembly 730 of the compressive material 620 over the upper 700 and the last 720 coupled to the docking member 630. As can be seen in FIG. 9B, the shiftable portions 631a and 631b are closed down onto the bottom docking member 637 and can be secured in place utilizing temporary fasteners 641, 642, 643, and 644. In such an aspect, one or more ports 638 can provide the negative pressure to facilitate the compression of the compressive material 620 onto the outer surface of the upper 700. It should be understood that the positioning of the port 638 is just one example of the position of a port that can provide negative pressure, and that other positioning of a port or other specific amounts of ports are contemplated for use in the system disclosed herein.

While not shown in FIGS. 9A and 9B, as discussed above, the coupling platform 610 of the article compression assembly 600 can be coupled to one of the plurality of radially extending members 122 of the article movement mechanism 120, and through this connection, the port 638 can be in fluid communication with a negative pressure generation system. FIG. 6 depicts a negative pressure generation system 150 coupled to the article movement mechanism 120. The negative pressure generation system 150 can be coupled to the article movement mechanism 120 in any conventional manner, e.g., one or more conduits can be coupled to each of the plurality of radially extending members 122 of the article movement mechanism 120, where such conduits can be in fluid communication with the port 638 associated with the article compression assembly 600.

In the aspect depicted in FIG. 9A, the docking member 630 is angled with respect to the horizontal plane 610a of the coupling platform 610 of the article compression assembly 600. In such aspects, this can result in a portion of the article, e.g., the ground-facing portion 708 (or a plane 708a of the ground-facing portion 708) also being angled with respect to the horizontal plane 610a of the coupling platform 610. In such aspects, this angled orientation of the upper or other article can provide for more efficient heating, e.g., by having the forefoot area 704 more exposed to one or more thermal elements, such as depicted in FIG. 3A. In one aspect, the angle between the plane 708a and the plane 610a can be a range of from about 10° to about 60°, from about 15° to about 50°, or from about 20° to about 40°, or can be about 30°.

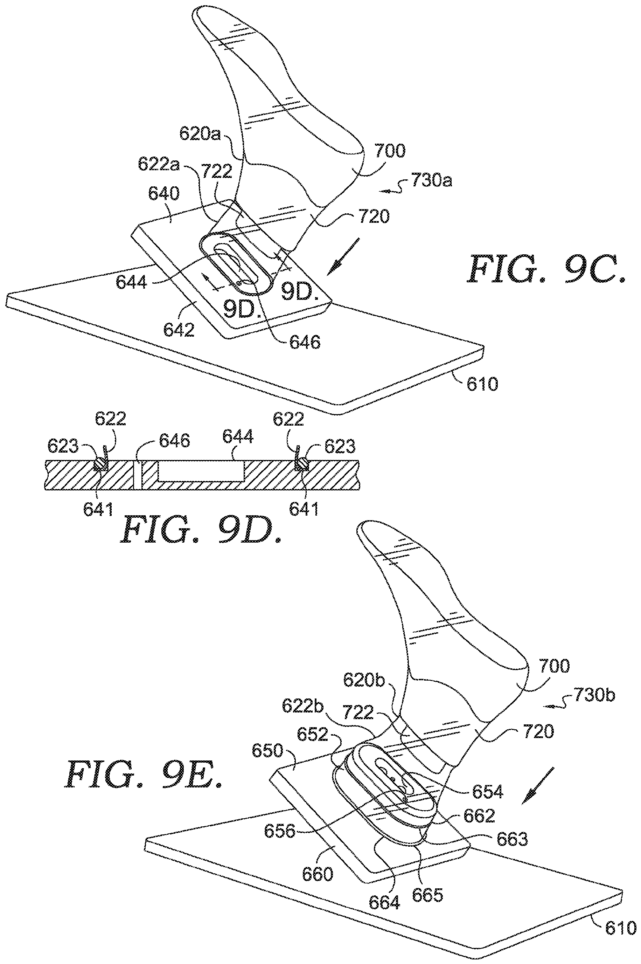

FIG. 9C depicts another example of a docking member, docking member 640, that when coupled to an assembly 730a of a compressive material 620a placed on the upper 700 and the last 720, can provide negative pressure to facilitate an increased level of compressive force on the upper 700. The assembly 730a is an alternate version of the assembly 730 depicted in FIG. 8B, as the compressive material 620a in the assembly 730a is modified from the compressive material 620 of the assembly 730 of FIG. 8B. For example, in the aspect depicted in FIG.9C, the compressive material 620a does not include the flange 624 present on the compressive material 620 of FIG. 8B, but can include the other properties and parameters of the compressive material 620 discussed above. In certain aspects, as discussed further below, the compressive material 620a may include additional features not found on an aspect of the compressive material 620 of FIG. 8B. In aspects, like the docking member 630 of FIGS. 9A and 9B, the docking member 640 is coupled to the coupling platform 610, which as discussed above, is coupled to one of the plurality of radially extending members 122 of the article movement mechanism 120 of FIG. 1.

At a high level, the docking member 640 of FIG. 9C depicts an example of how the compressive material 620a of the assembly 730a can secure the assembly 730a to the docking member 640 and facilitate a seal between the compressive material 620a and the docking member 640 so that negative pressure can be applied to facilitate the compression of the compressive material 620a onto the outer surface of the upper 700. As can be seen in FIG. 9C, the docking member 640 can be comprised of a docking plate 642 having a recess 644 sized for receiving the protrusion 722 of the last 720, as well as one or more ports 646 that can provide this negative pressure to facilitate the compression of the compressive material 620a onto the outer surface of the upper 700. It should be understood that the positioning of the port 644 is just one example of the position of a port that can provide negative pressure, and that other positions of a port or other specific numbers of ports are contemplated for use in the system disclosed herein.

Further, as can be seen in FIG. 9C, the docking member 640 includes the single docking plate 642, which is adapted, along with the sealing portion 622a of the compressive material 620a, to seal the compressive material 620a around the port 644 when negative pressure is applied through the port 644. In such an aspect, as can be seen FIGS. 9C and 9D, the sealing portion 622a of the compressive material 620a can include an O-ring 623 that is at least partly complementary in shape to a recess 641 in the docking plate 642. Further, in the aspect depicted in FIGS. 9C and 9D, the recess 641 in the docking plate 642 can form a perimeter around the recess 644 for the protrusion 722 of the last 700 and around the port 646. In such an aspect, this allows for the seal that is at least partly created by the O-ring 623 and the recess 641 in the docking plate 642 to facilitate the compression of the compressive material 620a onto the outer surface of the upper 700, when negative pressure is applied via the port 646. It should be understood that the O-ring 623 and recess 641 in the docking plate 642 are only one example for forming this seal between the docking plate 642 and the compressive material 620a, and that other complementary structures present on the docking plate 642 and the compressive material 620a are also contemplated for use in the systems and methods described herein.

FIG. 9C depicts the assembly 730 not fully engaged with the docking member 640, e.g., the protrusion 722 of the last 720 is not inserted into the recess 644 of the docking plate 642. It should be understood that in operation, the protrusion 722 of the last 720 can be inserted into the recess 644 of the docking plate 642 while the O-ring 623 is engaged with the recess 641. In such an aspect, the sealing portion 622a of the compressive material 620a may include extra material, e.g., the portion of the sealing portion 622a that is positioned between the protrusion 722 and the docking plate 642 as depicted in FIG. 9C. However, in such an aspect the extra material may also compress onto the last 720 and/or the upper 700 when exposed to negative pressure and when the last is fully engaged with the docking member 640, and such extra material may not adversely affect the thermoforming process to the upper 700 or may not cause deformations in the upper 700 during the thermoforming process.

FIG. 9E depicts yet another example of a docking member, e.g., docking member 650, that, when coupled to an assembly 730b of a compressive material 620b placed on the upper 700 and the last 720, can provide negative pressure to facilitate an increased level of compressive force on the upper 700. The assembly 730b is an alternate version of the assembly 730 depicted in FIG. 8B, as the compressive material 620b in the assembly 730b is modified from the compressive material 620 of the assembly 730 of FIG. 8B, but can include the other properties and parameters of the compressive material 620 discussed above. For example, in the aspect depicted in FIG.9E, the compressive material 620b does not include the flange 624 present on the compressive material 620 of FIG. 8B. In certain aspects, as discussed further below, the compressive material 620b may include additional features not found on an aspect of the compressive material 620 of FIG. 8B. In aspects, like the docking member 630 of FIGS. 9A and 9B, the docking member 640 is coupled to the coupling platform 610, which as discussed above, is coupled to one of the plurality of radially extending members 122 of the article movement mechanism 120.

As can be seen in the aspect depicted in FIG. 9E, the docking member 650, a collar 652 that extends outward from the docking member 650, and the compressive material 620b of the assembly 730b are adapted to cooperatively provide for a seal of the compressive material 620b around the a port 656 to apply negative pressure to compress the compressive material 620b onto the upper 700. In such an aspect, the sealing portion 622b of the compressive material 620b can include two O-rings 662 that engage a complementary shaped recess 663 in the collar 652 and a complementary shaped recess 665 in a docking plate 660 of the docking member 650, respectively. While not depicted as a cross-section in the figures, the O-rings 662 and 664 can engage the respective recesses 663 and 665 in a manner similar to that depicted in the cross-section of FIG. 9D. While, the aspect depicted in FIG. 9E shows O-rings being utilized, it should be understood that any type of structure or shape, that is integral with the compressive material 620b or that is a separate element than the compressive material 620b, can be utilized with corresponding complementary shapes or recesses in the collar 652 and the docking plate 660.

It should be understood that while the aspect depicted in FIG. 9E shows two O-rings 662 and 664 for creating a seal with the compressive material 620b onto the collar 652 and the docking plate 660, it should be understood that more or less O-rings or sealing structures is contemplated for use in the present disclosure. For instance, in one alternative aspect, the compressive material 620b of FIG. 9E may include the O-ring 662 to engage the collar 652 but not the O-ring 664 to engage the docking plate 660. In another aspect, the compressive material 620b can include more than one O-ring that is adapted to engage the collar 652. In yet another aspect, the compressive material 620b may not include one or more O-rings or other sealing structures and may be manually or otherwise held in place around the port 656 while providing negative pressure such that a seal is still created that can provide a compressive force to the upper 700, e.g., by sealing around a portion of the collar 652 and/or the docking plate 660.

While as various examples of docking members are depicted above in FIGS. 9A-9E, it should be understood that any combination of features from the various docking members discussed above can be combined. For example, in addition to the features of the aspect depicted in FIGS. 9A and 9B, an O-ring or other sealing structure can be present on the compressive material 620 for engaging the collar 634 to ensure a tighter or better seal.

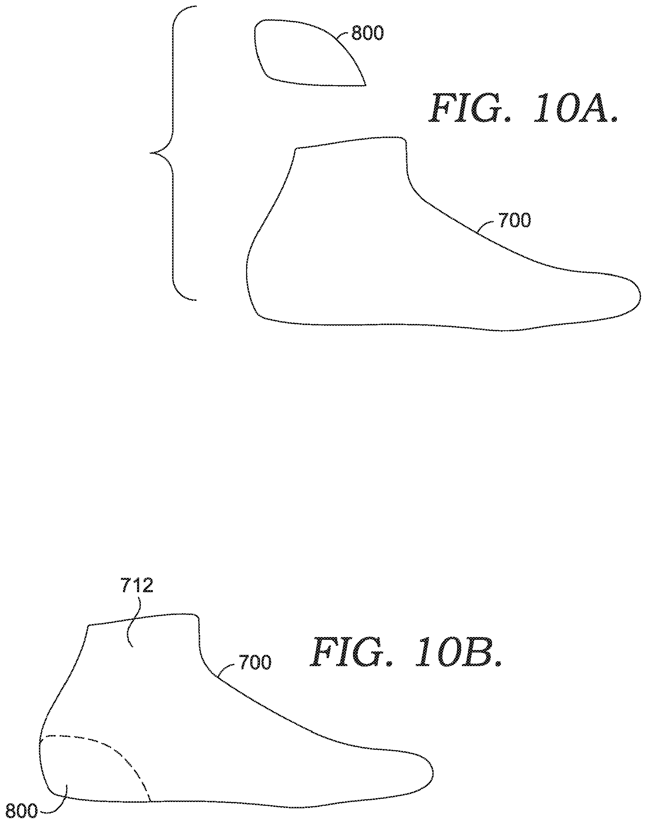

In various aspects, the upper disclosed herein can include additional materials to provide additional comfort and/or support to a wearer for an article of footwear formed using the processes and systems described herein. Example additional materials can include a chassis that that can be positioned on a foot bed of the article of footwear and a heel counter. FIGS. 10A and 10B depict a heel counter 800 and the upper 700. In one aspect, the heel counter 800 can be formed from any type of material so long as such a material will not melt or deform during the processing described above. While the heel counter 800 is specifically described in the Figures it should be understood that other components, such as the chassis discussed above, can also be combined with the upper 700 for processing.

FIG. 10B depicts the heel counter 800 positioned in interior portion 712 of the upper 700. In certain aspects, in order to secure the heel counter 800 to the interior portion 712 of the upper 700, a bonding agent may be utilized to secure the heel counter 800, or other component, to the upper 700. Any conventional bonding agents, such as hot melt adhesives, are contemplated for use in the processes and systems described herein. In one aspect, the bonding agent is capable of withstanding the processing temperature provided in the heating station 200 and the first cooling station 300, and can be effective for bonding under the conditions described above with respect to the second cooling station 400, e.g., that the article is cooled or maintained at a temperature range of about 40 °C to about 90 °C.

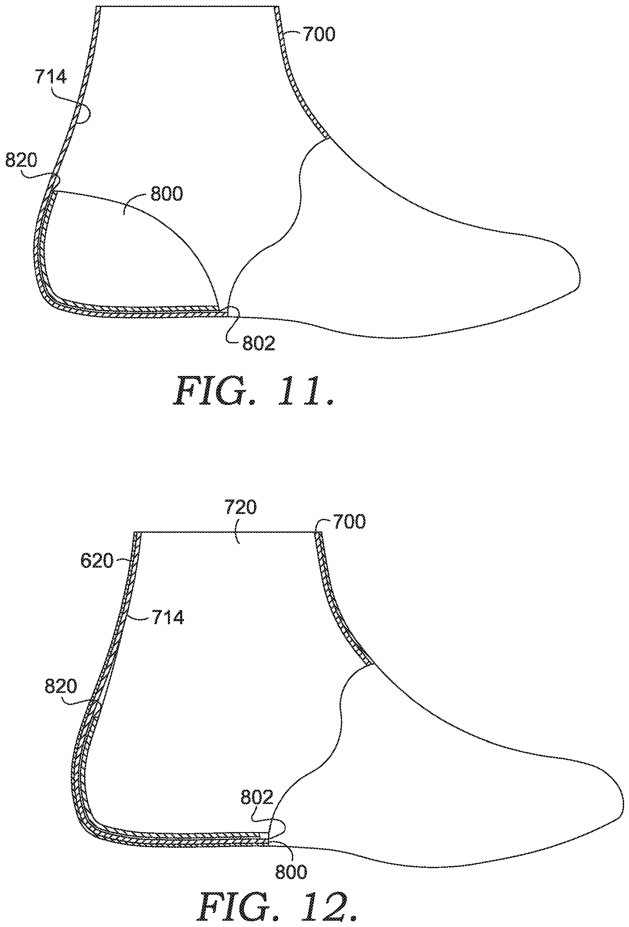

FIG. 11 depicts the upper 700 with the heel counter 800 positioned therein, with a portion of the upper 700 removed to reveal a cross section of a portion of the upper 700 and of the heel counter 800. In the aspect depicted in FIG. 11, a bonding agent 820 is positioned between the inner surface 714 of the upper 700 and an outer surface 802 of the heel counter 800.

FIG. 12 depicts the heel counter 800 inside of the upper 700, when the upper 700 is positioned on the last 720, and the compressive material 620 is positioned over the upper 700. As discussed above, in certain aspects, the compressive material 620 can apply a compressive force to the upper 700 and compress the upper 700 against the last 720, via the elastomeric properties of the compressive material 620, the application of pressure above atmospheric pressure, or both. Further, as discussed above, in such an aspect, the system 100 can be adapted to provide the increased pressure to the upper 700 at a temperature where a bonding agent, e.g., the bonding agent 820, is in a temperature range for effective bonding, so that the increased pressure and the concomitant increased compressive force on the upper 700 against the heel counter 800 and the last 720 can more effectively bond together the heel counter 800 and the upper 700. It should be understood that while, in FIG. 12, the compressive material 620 of FIG. 8B is depicted, other compressive materials may be utilized, such as the compressive materials 620a and 620b of FIGS. 9C and 9E, respectively.

In an aspect not depicted in the figures, one or more components, such as a heel counter, or chassis, can include one or more materials that is adapted to at least partly melt or deform through the processes discussed herein and can cool and harden and secure or bond to at least a portion of an upper. In such an aspect, the material of the heel counter or chassis (or other component) may not be completely solidified so as to further form to the shape of the last or other forming material when exposed to the increased pressure of the second cooling station 400 discussed above.

It should be understood that the above examples of additional components, such as the heel counter and chassis, have been discussed other components may be added prior to or after the processes discussed herein. In one example, a sock liner, a plate, a toe cap, and/or structures along the sides may also be added to the upper with or without a chassis and a heel counter.

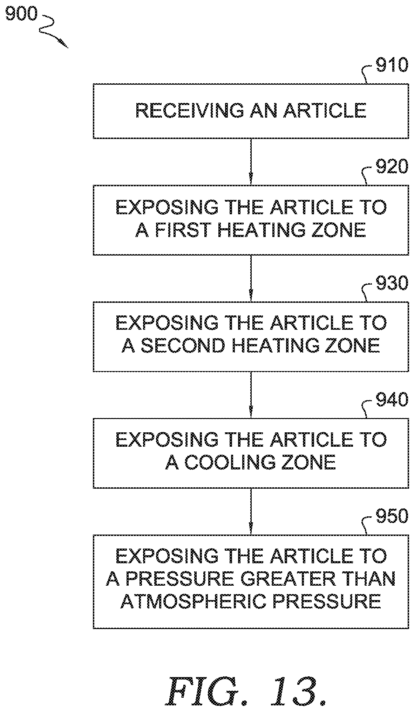

FIG. 13 depicts a flow diagram of a method 900 for thermoforming an article. The method 900 can include the step 910 of receiving an article. In aspects, the article can be any type of article, such as any of the articles discussed above. In one aspect, the article can be an upper, such as the upper 700 discussed above with reference to FIGS. 7A-12.

In certain aspects, the method 900 can include the step 920 of exposing the article to a first heating zone. In aspects, the heating zone can include one or more thermal elements and one or more air circulation devices, such as the thermal elements and air circulation devices discussed above with reference to the heating zone 201 of FIGS. 2 and 3A. In various aspects, the article in the first heating zone can be exposed to a temperature in a range of about 70 °C to about 250 °C. In one aspect, the first heating zone can include any or all of the features, properties, and parameters of the heating zone 201 discussed above with reference to FIGS. 2, 3A, and 6.

Step 930 of the method 900 includes exposing the article to a second heating zone. In aspects, the heating zone can include one or more air circulation devices, such as the air circulation devices discussed above with reference to the heating zone 205 of FIGS. 2 and 3B. In various aspects, the article in the second heating zone can be exposed to a temperature in a range of from about 70 °C to about 250 °C. In one aspect, the second heating zone can increase the temperature of at least a portion of the article at a reduced rate compared to the rate of temperature increase of the article when exposed to the first heating station. In one aspect, the second heating zone can include any or all of the features, properties, and parameters discussed above with respect to the heating zone 205 of FIGS. 2, 3B, and 6.

Step 940 of the method 900 includes exposing the article to a first cooling station. In aspects, the article can be exposed to the first cooling station subsequent to the article being exposed to the second heating zone. In various aspects, the first cooling station can be adapted to cool at least a portion of the article to a temperature in a range of about 40 °C to about 90 °C. In one aspect, the first cooling station can include one or more air circulation devices, such as the air circulation devices discussed above with reference to the first cooling station 300 of FIGS. 1 and 4. In aspects, the first cooling station can be present at ambient temperature and pressure. In aspects, the first cooling station can include any of all of the features, properties, and parameters of the first cooling station 300 discussed above with reference to FIGS. 1, 4, and 6.

Step 950 of the method 900 includes exposing the article to a pressure greater than atmospheric pressure. In one aspects, the article can be exposed to a pressure greater than atmospheric pressure subsequent to being exposed to the first cooling station. In one aspect, the second cooling station 400 discussed above with reference to FIGS. 1 and 5 can be utilized to expose the article to a pressure greater than atmospheric pressure. In one aspect, the increased pressure can apply a compressive force to the outer surface of the article (with or without the presence of a compressive material discussed above) to aid in forming an article to the shape of a forming material, e.g., forming an upper to the shape of a last. In the same or alternative aspects, the increased pressure can apply a compressive force (with or without the presence of a compressive material discussed above) to facilitate bonding of one component of the article to another component of the article. In such an aspect, a bonding agent can be utilized that functions at the temperature ranges for the second cooling station 400 discussed above with reference to FIGS. 5, 6, 11, and 12. In aspects, any or all of the of the features, properties, and parameters of the second cooling station 400 discussed above with reference to FIGS. 5, 6, 11, and 12 can be utilized to aid in performing the functions and features of the step 950.

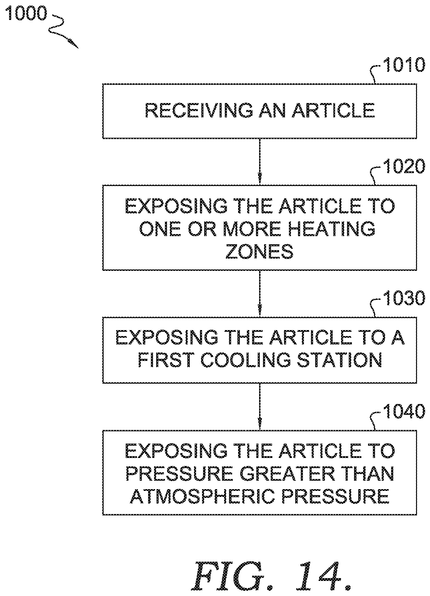

FIG. 14 depicts a flow diagram of a method 1000 for thermoforming an article. The method 1000 can include the step 1010 of receiving an article. In aspects, the article can be any type of article, such as any of the articles discussed above. In certain aspects, the article can comprise a thermoplastic polymeric composition or a thermoplastic material discussed above. In one aspect, the article can be an upper, such as the upper 700 discussed above with reference to FIGS. 7A-12.

In certain aspects, the method 1000 can include the step 1020 of exposing the article to one or more heating zones. In such an aspect, exposing the article to one or more heating zones can increase the temperature of at least a portion of the article above a melting temperature of the thermoplastic polymeric composition. In aspects, the one or more heating zones can include any or all of the features, properties, and parameters of the heating zones 201 and/or 205 discussed above with reference to FIGS. 2, 3A, 3B, and 6.

In aspects, the method 1000 can include the step 1030 of exposing the article to a first cooling station. In such an aspect, the article can be exposed to the first cooling station to reduce the temperature of the at least a portion of the article to a temperature that is: 1) below the melting temperature of the thermoplastic polymeric composition; and 2) above: a heat deflection temperature; a Vicat softening temperature; or both, of the thermoplastic polymeric composition. In aspects, the step 1030 of exposing the article to a first cooling station can be performed subsequent to the step 1020 of exposing the article to one or more heating zones. In various aspects, the first cooling station can be adapted to cool at least a portion of the article to a temperature in a range of about 40 °C to about 90 °C. In one aspect, the first cooling station can include one or more air circulation devices, such as the air circulation devices discussed above with reference to the first cooling station 300 of FIGS. 1 and 4. In aspects, the first cooling station can be present at ambient temperature and pressure. In aspects, the first cooling station can include any of all of the features, properties, and parameters of the first cooling station 300 discussed above with reference to FIGS. 1, 4, and 6.

In aspects, the method 1000 can include the step 1040 of exposing the article to a pressure greater than atmospheric pressure. In such an aspect, the step 1040 can be performed subsequent to the step 1030 of exposing the article to a first cooling station. In one aspect, the second cooling station 400 discussed above with reference to FIGS. 1 and 5 can be utilized to expose the article to a pressure greater than atmospheric pressure. In one aspect, the increased pressure can apply a compressive force to the outer surface of the article (with or without the presence of a compressive material discussed above) to aid in forming an article to the shape of a forming material, e.g., forming an upper to the shape of a last. In the same or alternative aspects, the increased pressure can apply a compressive force (with or without the presence of a compressive material discussed above) to facilitate bonding of one component of the article to another component of the article. In such an aspect, a bonding agent can be utilized that functions at the temperature ranges for the second cooling station 400 discussed above with reference to FIGS. 5, 6, 11, and 12. In aspects, any or all of the features, properties, and parameters of the second cooling station 400 discussed above with reference to FIGS. 5, 6, 11, and 12 can be utilized to aid in performing the functions and features of the step 1040.

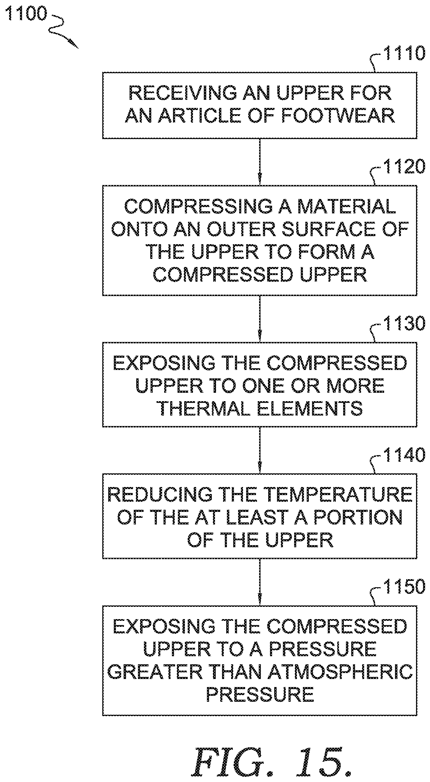

FIG. 15 depicts a flow diagram of a method 1100 for thermoforming an article. The method 1100 can include the step 1110 of receiving an upper for an article of footwear. In one aspect, the article can be an upper, such as the upper 700 discussed above with reference to FIGS. 7A-12. In certain aspects, the upper can comprise a thermoplastic polymeric composition or a thermoplastic material discussed above. In aspects, the upper can be positioned on a last or other forming material. In aspects, the last can include any or all of the features, properties, and parameters of the last 720 discussed above with reference to FIGS. 7B - 12.

The method 1100, in aspects, can include a step 1120 of compressing a material onto an outer surface of the upper to form a compressed upper. In aspects, the material for compressing onto the upper can include one or more of the compressive materials 620, 620a, or 620b discussed above with reference to FIGS. 8A, 8B, 9C, and 9E. In aspects, the docking members 630, 640, and 650 of FIGS. 9A, 9C, and 9E, respectively, and associated processes discussed above, can be utilized to facilitate compressing the material onto the outer surface of the upper.

In various aspects, the method 1100 can include a step 1130 of exposing the compressed upper to one or more thermal elements. In such aspects, exposing the compressed upper to one or more thermal elements can increase a temperature of at least a portion of the upper above a melting temperature of the thermoplastic polymeric composition. In one or more aspects, exposing the compressed upper to one or more thermal elements can include exposing the compressed upper to the heating station 200 discussed above with reference to FIGS. 2 and 3A.

In certain aspects, the method 1100 can include a step 1140 of reducing the temperature of at least a portion of the upper. In such aspects, the temperature of at least a portion of the upper can be reduced to a temperature that is: 1) below the melting temperature of the thermoplastic polymeric composition; and 2) above: a heat deflection temperature; a Vicat softening temperature; or both, of the thermoplastic polymeric composition. In one or more aspects, reducing the temperature of at least a portion of the upper can include exposing he compressed upper to one or more cooling stations, such as the first cooling station 300 discussed above with reference to FIG. 4. In aspects, the step 1140 of reducing the temperature of at least a portion of the upper can be performed subsequent to the step 1130 of exposing the compressed upper to one or more thermal elements.

In various aspects, the method 1100 can include a step 1150 of exposing the compressed upper to a pressure greater than atmospheric pressure. In such an aspect, the step 1150 can be performed subsequent to the step 1140 of reducing the temperature of at least a portion of the upper. In one aspect, the second cooling station 400 discussed above with reference to FIGS. 1 and 5 can be utilized to expose the compressed upper to a pressure greater than atmospheric pressure. In one aspect, the increased pressure can apply a compressive force to the outer surface of the upper to aid in forming the upper to at least a portion of the last. In the same or alternative aspects, the increased pressure can apply a compressive force to facilitate bonding of one component of the upper to another component of the upper. In such an aspect, a bonding agent can be utilized that functions at the temperature ranges for the second cooling station 400 discussed above with reference to FIGS. 5, 6, 11, and 12. In aspects, any or all of the of the features, properties, and parameters of the second cooling station 400 discussed above with reference to FIGS. 5, 6, 11, and 12 can be utilized to aid in performing the functions and features of the step 1150.

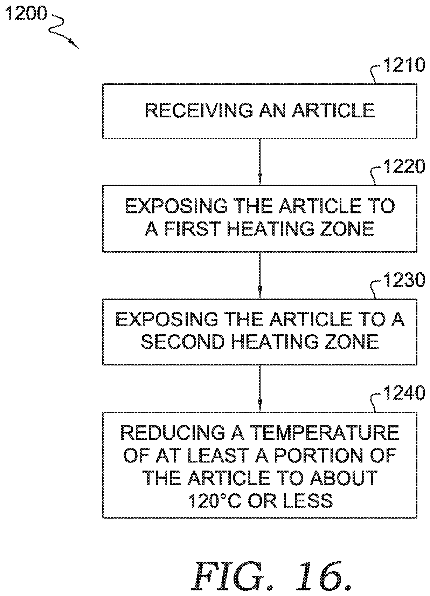

FIG. 16 depicts a flow diagram of a method 1200 for thermoforming an article. The method 1200 can include the step 1210 of receiving an article. In aspects, the article can be any type of article, such as any of the articles discussed above. In certain aspects, the article can comprise a thermoplastic polymeric composition or a thermoplastic material discussed above. In one aspect, the article can be an upper, such as the upper 700 discussed above with reference to FIGS. 7A-12.

In aspects, the method 1200 can also include the step 1220 of exposing the article to a first heating zone. In such an aspect, the first heating zone can comprise one or more thermal elements and one or more first air circulation devices. In aspects, the first heating zone can be adapted to increase a temperature of the first heating zone from about 25 °C to about 200 ° C in less than or equal to 50 seconds. In one aspect, the first heating zone can include any or all of the features, properties, and parameters of the heating zone 201 discussed above with reference to FIGS. 2, 3A, and 6.

In certain aspects, the method 1200 can include the step 1230 of exposing the article to a second heating zone. In such an aspect, the second heating zone can comprise one or more second air circulation devices, such as the air circulation devices discussed above with respect to the heating zone 205 of FIG. 3B. In aspects, the second heating zone can be adapted to maintain about a temperature of the article achieved in the first heating zone. In aspects, such a temperature can be a temperature at or above a melting temperature, a heat deflection temperature; a Vicat softening temperature; or a combination thereof, of a thermoplastic material of the article. In aspects, the second heating zone can include any or all of the features, properties, and parameters of the heating zone 205 discussed above with reference to FIGS. 2, 3B, and 6.

In various aspects, the method 1200 can include the step 1240 of reducing a temperature of at least a portion of the article to about 120 °C or less. In one aspect, the step 1240 of reducing the temperature of at least a portion of the article can be performed subsequent to the step 1230 of exposing the article to a second heating zone. In aspects, the step 1240 can be performed at a cooling station, such as the cooling station 300 discussed of FIGS. 1, 4, and 6, and can include any or all of the features, properties, and parameters of this cooling station 300.

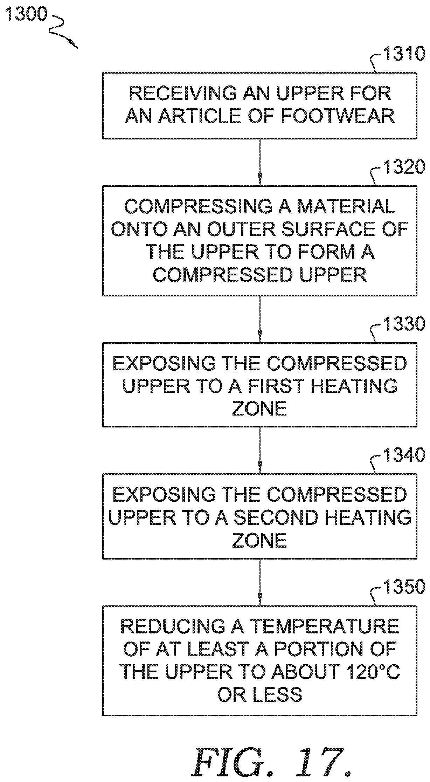

FIG. 17 depicts a flow diagram of a method 1300 for thermoforming an article. The method 1300 can include the step 1310 of receiving an upper for an article of footwear. In one aspect, the article can be an upper, such as the upper 700 discussed above with reference to FIGS. 7A-12. In aspects, the upper can be positioned on a last or other forming material. In aspects, the last can include any or all of the features, properties, and parameters of the last 720 discussed above with reference to FIGS. 7B - 12.

The method 1300, in aspects, can include a step 1320 of compressing a material onto an outer surface of the upper to form a compressed upper. In aspects, the material for compressing onto the upper can include one or more of the compressive materials 620, 620a, or 620b discussed above with reference to FIGS. 8A, 8B, 9c, and 9E. In aspects, the docking members 630, 640, and 650 of FIGS. 9A, 9C, and 9E, respectively, and associated processes discussed above, can be utilized to facilitate compressing the material onto the outer surface of the upper

In aspects, the method 1300 can also include the step 1330 of exposing the compressed upper to a first heating zone. In such an aspect, the first heating zone can comprise one or more thermal elements and one or more first air circulation devices. In aspects, the first heating zone can be adapted to increase a temperature of the first heating zone from about 25 °C to about 200 ° C in less than or equal to 50 seconds. In one aspect, the first heating zone can include any or all of the features, properties, and parameters of the heating zone 201 discussed above with reference to FIGS. 2, 3A, and 6.

In certain aspects, the method 1300 can include the step 1340 of exposing the compressed upper to a second heating zone. In such an aspect, the second heating zone can comprise one or more second air circulation devices, such as the air circulation devices discussed above with respect to the heating zone 205 of FIG. 3B. In aspects, the second heating zone can be adapted to maintain about a temperature of the compressed upper achieved in the first heating zone. In aspects, such a temperature can be a temperature at or above a melting temperature, a heat deflection temperature; a Vicat softening temperature; or a combination thereof, of a thermoplastic material of the upper. In aspects, the second heating zone can include any or all of the features, properties, and parameters of the heating zone 205 discussed above with reference to FIGS. 2, 3B, and 6.

In various aspects, the method 1300 can include the step 1350 of reducing a temperature of at least a portion of the upper to about 120 °C or less. In one aspect, the step 1350 of reducing the temperature of at least a portion of the article can be performed subsequent to the step 1340 of exposing the compressed upper to a second heating zone. In aspects, the step 1240 can be performed at a cooling station, such as the cooling station 300 discussed of FIGS. 1, 4, and 6, and can include any or all of the features, properties, and parameters of this cooling station 300.

While specific reference in FIGS. 13-17 is made to one or more steps, it is contemplated that one or more additional or alternative steps may be implemented while achieving aspects provided herein. As such, blocks may be added or omitted while still staying within the scope hereof.

## Claims

1. A method for thermoforming an article (130), the method comprising:
receiving an article (130);
exposing the article (130, 131) to a first heating zone (201), the first heating zone (201) comprising one or more thermal elements (220) and one or more first air circulation devices (232),
wherein the first heating zone (201) is adapted to expose the article (130) to a temperature in a range of 70 °C to 250 °C;
exposing the article (130, 131) to a second heating zone (205), the second heating zone (205) comprising one or more second air circulation devices (234),
wherein the second heating zone (205) is adapted to expose the article (130, 131) to a temperature in a range of 70 °C to 250 °C;
subsequent to exposing the article (130, 131) to the second heating zone (205), exposing the article (130) to a first cooling station (300), the first cooling station comprising one or more third air circulation devices (302, 304, 306),
wherein the first cooling station (300) is adapted to reduce a temperature of at least a portion of the article (130, 131) to a range of 40 °C to 90 °C; and
subsequent to exposing the article to the first cooling station (300), exposing the article (130) to a second cooling station, the second cooling station comprising a chamber,
wherein the chamber exposes the article to a pressure greater than atmospheric pressure.

2. The method of claim 1, wherein the first and second heating zones (201, 205) are at least partially enclosed, and optionally wherein the first and second heating zones (201, 205) are in fluid communication with one another.

3. The method of claim 1, wherein the exposing the article (130) to the first heating zone (201) comprises shifting the article (130, 131) to a first position within the first heating zone (201) and subsequently shifting the article (130, 131) from the first position to a second position within the first heating zone (201).

4. The method of claim 3, wherein the article (130) is located at the first position of the first heating zone (201) for a time of 40 seconds to 70 seconds.

5. The method of claim 1, wherein the article (130, 131) is exposed to the first heating zone (201) for a first time period and to the second heating zone (205) for a second time period, and wherein each of the first time period and the second time period are 80 seconds to 140 seconds, and optionally wherein the first time period and the second time period are the same.

6. The method of claim 1, wherein, when the article (130, 131) is exposed to the second heating zone (205), the second heating zone (205) is adapted to increase the temperature of at least a portion of the article (130, 131) at a reduced rate compared to the rate of temperature increase of the at least a portion of the article (130) when the article (130, 131) is exposed to the first heating station (201).

7. The method of claim 1, wherein the exposing the article (130) to a pressure greater than atmospheric pressure occurs at a second cooling zone (400), wherein the second cooling zone (400) is spaced apart from the first cooling zone (400), and wherein the second cooling zone (400) comprises a chamber (410) adapted to temporarily seal off the article (130) from ambient temperature and pressure.

8. The method of claim 1, wherein the article (130, 131) comprises at least a first component and a second component, wherein when the article (130, 131) is exposed to the pressure greater than atmospheric pressure, the article exhibits a temperature in a range of 50 °C to 80 ° C, and optionally wherein a bonding agent (820) is present at an interface between at least a portion of the first component and at least a portion of the second component.

9. The method of claim 1, further comprising compressing a material on an outer surface of the article (130) , and optionally, wherein the material is an elastomeric material, wherein the elastomeric material exhibits a melting temperature greater than 135 °C.

10. The method of claim 1, wherein the article (130, 131) comprises at least a portion of an article of footwear.

11. A system (100) for thermoforming an article, the system (100) comprising:
a heating station (200) that is at least partially enclosed, the heating station (200) comprising a first heating zone (201) and a second heating zone (205), the second heating zone (205) being in fluid communication with the first heating zone (201),
wherein the first heating zone (201) comprises one or more thermal energy elements (220) and one or more first air circulation devices (232),
wherein the second heating zone (205) comprises one or more second air circulation devices (234),
wherein at least the first heating zone (201) is adapted to expose at least one article (130, 131) to a temperature in a range of 70 °C to 250 °C;
a first cooling station (300) comprising one or more third air circulation devices (302, 304, 306), the first cooling station (300) being exposed to atmospheric pressure;
a second cooling station (400), the second cooling station (400) comprising a chamber (410) adapted to expose the at least one article (130, 131) to a pressure above atmospheric pressure; and
an article movement mechanism (120), the article movement mechanism (120) adapted to transfer the at least one article (130, 131) from the heating station (200) to the first cooling station (300), and further adapted to transfer the at least one article (130) from the first cooling station (300) to the second cooling station (400).

12. The system (100) of claim 11, wherein the first cooling station (300) is adapted to decrease a temperature of at least a portion of the at least one article (130, 131) to a range of 50 °C to 70 °C.

13. The system (100) of claim 11, further comprising an article compression assembly (600), the article compression assembly (600) adapted to compress an elastomeric material on an outer surface of the at least one article (130) as the at least one article (130, 131) is exposed to one or more of the heating station (200), the first cooling station (300), or the second cooling station (400).

14. The system (100) of claim 13, wherein the article compression assembly (600) is coupled to a negative pressure generation system (100), wherein the article compression assembly (600) is adapted to compress the elastomeric material on the outer surface of the at least one article (130) by exposing the outer surface of the at least one article (130) and an inner surface of the elastomeric material to a pressure less than atmospheric pressure.

15. The system (100) of claim 13, wherein the article compression assembly (600) is adapted to be coupled to a last, and optionally wherein the article comprises at least a portion of an article of footwear.

## Patentansprüche

1. Ein Verfahren zum Thermoformen eines Artikels (130), wobei das Verfahren Folgendes umfasst:
Aufnehmen eines Artikels (130),
Aussetzen des Artikels (130, 131) einer ersten Heizzone (201), wobei die erste Heizzone (201) ein oder mehrere thermische Elemente (220) und eine oder mehrere erste Luftzirkulationsvorrichtungen (232) umfasst,
wobei die erste Heizzone (201) dazu ausgelegt ist, den Artikel (130) einer Temperatur in einem Bereich von 70 °C bis 250 °C auszusetzen;
Aussetzen des Artikels (130, 131) einer zweiten Heizzone (205), wobei die zweite Heizzone (205) eine oder mehrere zweite Luftzirkulationsvorrichtungen (234) umfasst,
wobei die zweite Heizzone (205) dazu ausgelegt ist, den Artikel (130, 131) einer Temperatur in einem Bereich von 70 °C bis 250 °C auszusetzen;
im Anschluss an das Aussetzen des Artikels (130, 131) der zweiten Heizzone (205), Aussetzen des Artikels (130) einer ersten Kühlstation (300), wobei die erste Kühlstation eine oder mehrere dritte Luftzirkulationsvorrichtungen (302, 304, 306) umfasst,
wobei die erste Kühlstation (300) dazu ausgelegt ist, eine Temperatur von mindestens einem Teil des Artikels (130, 131) auf einen Bereich von 40 °C bis 90 °C zu reduzieren; und
im Anschluss an das Aussetzen des Artikels der ersten Kühlstation (300), Aussetzen des Artikels (130) einer zweiten Kühlstation, wobei die zweite Kühlstation eine Kammer umfasst,
wobei die Kammer den Artikel einem Druck aussetzt, der größer ist als der Atmosphärendruck.

2. Das Verfahren nach Anspruch 1, wobei die erste und die zweite Heizzone (201, 205) zumindest teilweise umschlossen sind, und wobei, optional, die erste und die zweite Heizzone (201, 205) in Fluidverbindung miteinander stehen.

3. Das Verfahren nach Anspruch 1, wobei das Aussetzen des Artikels (130) der ersten Heizzone (201) Folgendes umfasst: Verschieben des Artikels (130, 131) in eine erste Position innerhalb der ersten Heizzone (201) und anschließend Verschieben des Artikels (130, 131) von der ersten Position in eine zweite Position innerhalb der ersten Heizzone (201).

4. Das Verfahren nach Anspruch 3, wobei sich der Artikel (130) in der ersten Position der ersten Heizzone (201) für eine Zeit von 40 Sekunden bis 70 Sekunden befindet.

5. Das Verfahren nach Anspruch 1, wobei der Artikel (130, 131) der ersten Heizzone (201) für eine erste Zeitspanne und der zweiten Heizzone (205) für eine zweite Zeitspanne ausgesetzt wird, und wobei die erste Zeitspanne und die zweite Zeitspanne jeweils 80 Sekunden bis 140 Sekunden betragen, und wobei optional die erste Zeitspanne und die zweite Zeitspanne gleich sind.

6. Das Verfahren nach Anspruch 1, wobei, wenn der Artikel (130, 131) der zweiten Heizzone (205) ausgesetzt wird, die zweite Heizzone (205) dazu ausgelegt ist, die Temperatur von mindestens einem Teil des Artikels (130, 131) mit einer reduzierten Rate zu erhöhen im Vergleich zur Rate der Temperaturerhöhung des mindestens einen Teils des Artikels (130), wenn der Artikel (130, 131) der ersten Heizstation (201) ausgesetzt wird.

7. Das Verfahren nach Anspruch 1, wobei das Aussetzen des Artikels (130) einem Druck, der größer als der Atmosphärendruck ist, in einer zweiten Kühlzone (400) erfolgt, wobei die zweite Kühlzone (400) von der ersten Kühlzone (400) beabstandet ist, und wobei die zweite Kühlzone (400) eine Kammer (410) umfasst, die dazu ausgelegt ist, den Artikel (130) vorübergehend von der Umgebungstemperatur und dem Umgebungsdruck abzuschotten.

8. Das Verfahren nach Anspruch 1, wobei der Artikel (130, 131) mindestens eine erste Komponente und eine zweite Komponente umfasst, wobei, wenn der Artikel (130, 131) dem Druck, der größer als der Atmosphärendruck ist, ausgesetzt wird, der Artikel eine Temperatur in einem Bereich von 50 °C bis 80 °C aufweist, und wobei optional ein Bindemittel (820) an einer Grenzfläche zwischen mindestens einem Teil der ersten Komponente und mindestens einem Teil der zweiten Komponente vorhanden ist.

9. Das Verfahren nach Anspruch 1, das ferner Folgendes umfasst: Komprimieren eines Materials auf einer Außenfläche des Artikels (130), wobei es sich bei dem Material optional um ein elastomeres Material handelt, wobei das elastomere Material eine Schmelztemperatur von mehr als 135 °C aufweist.

10. Das Verfahren nach Anspruch 1, wobei der Artikel (130, 131) zumindest einen Teil eines Fußbekleidungsartikels umfasst.

11. Ein System (100) zum Thermoformen eines Artikels, wobei das System (100) Folgendes umfasst:
eine Heizstation (200), die zumindest teilweise umschlossen ist, wobei die Heizstation (200) eine erste Heizzone (201) und eine zweite Heizzone (205) umfasst, wobei die zweite Heizzone (205) in Fluidverbindung mit der ersten Heizzone (201) steht,
wobei die erste Heizzone (201) ein oder mehrere Wärme-Energieelemente (220) und eine oder mehrere erste Luftzirkulationsvorrichtungen (232) umfasst,
wobei die zweite Heizzone (205) eine oder mehrere zweite Luftzirkulationsvorrichtungen (234) umfasst,
wobei zumindest die erste Heizzone (201) ausgelegt ist, um zumindest einen Artikel (130, 131) einer Temperatur in einem Bereich von 70 °C bis 250 °C auszusetzen;
eine erste Kühlstation (300), die eine oder mehrere dritte Luftzirkulationsvorrichtungen (302, 304, 306) umfasst, wobei die erste Kühlstation (300) dem atmosphärischen Druck ausgesetzt ist;
eine zweite Kühlstation (400), wobei die zweite Kühlstation (400) eine Kammer (410) umfasst, die dazu ausgelegt ist, den mindestens einen Artikel (130, 131) einem Druck oberhalb des Atmosphärendrucks auszusetzen; und
einen Artikelbewegungsmechanismus (120), wobei der Artikelbewegungsmechanismus (120) dazu ausgelegt ist, den mindestens einen Artikel (130, 131) von der Heizstation (200) zur ersten Kühlstation (300) zu überführen, und ferner dazu ausgelegt ist, den mindestens einen Artikel (130) von der ersten Kühlstation (300) zur zweiten Kühlstation (400) zu überführen.

12. Das System (100) nach Anspruch 11, wobei die erste Kühlstation (300) dazu ausgelegt ist, eine Temperatur von mindestens einem Teil des mindestens einen Artikels (130, 131) auf einen Bereich von 50 °C bis 70 °C zu senken,

13. Das System (100) nach Anspruch 11, das ferner eine Artikel-Komprimieranordnung (600) umfasst, wobei die Artikel-Komprimieranordnung (600) dazu ausgelegt ist, ein elastomeres Material auf eine Außenfläche des mindestens einen Artikels (130) zu komprimieren, wenn der mindestens eine Artikel (130, 131) einem oder mehreren der folgenden Elemente ausgesetzt wird: der Heizstation (200), der ersten Kühlstation (300), oder der zweiten Kühlstation (400).

14. Das System (100) nach Anspruch 13, wobei die Artikel-Komprimieranordnung (600) mit einem Unterdruckerzeugungssystem (100) gekoppelt ist, wobei die Artikel-Komprimieranordnung (600) dazu ausgelegt ist, das elastomere Material auf der Außenfläche des mindestens einen Artikels (130) zu komprimieren, indem die Außenfläche des mindestens einen Artikels (130) und eine Innenfläche des elastomeren Materials einem Druck ausgesetzt werden, der geringer ist als der Atmosphärendruck.

15. Das System (100) nach Anspruch 13, wobei die Artikel-Komprimieranordnung (600) dazu ausgelegt ist, mit einem Leisten gekoppelt zu werden, und wobei, optional, der Artikel mindestens einen Teil eines Fußbekleidungsartikels umfasst.

## Revendications

1. Un procédé de thermoformage d'un article (130), le procédé comprenant le fait de :
recevoir un article (130) ;
exposer l'article (130, 131) à une première zone de chauffage (201), la première zone de chauffage (201) comprenant un ou plusieurs éléments thermiques (220) et un ou plusieurs premiers dispositifs de circulation d'air (232),
sachant que la première zone de chauffage (201) est adaptée pour exposer l'article (130) à une température comprise dans une plage de 70 °C à 250 °C ;
exposer l'article (130, 131) à une deuxième zone de chauffage (205), la deuxième zone de chauffage (205) comprenant un ou plusieurs deuxièmes dispositifs de circulation d'air (234),
sachant que la deuxième zone de chauffage (205) est adaptée pour exposer l'article (130, 131) à une température comprise dans une plage de 70 °C à 250 °C ;
après avoir exposé l'article (130, 131) à la deuxième zone de chauffage (205), exposer l'article (130) à une première station de refroidissement (300), la première station de refroidissement comprenant un ou plusieurs troisièmes dispositifs de circulation d'air (302, 304, 306),
sachant que la première station de refroidissement (300) est adaptée pour réduire une température d'au moins une partie de l'article (130, 131) à une plage de 40 °C à 90 °C ; et
après avoir exposé l'article à la première station de refroidissement (300), exposer l'article (130) à une deuxième station de refroidissement, la deuxième station de refroidissement comprenant une chambre,
sachant que la chambre expose l'article à une pression supérieure à la pression atmosphérique.

2. Le procédé d'après la revendication 1, sachant que la première et la deuxième zone de chauffage (201, 205) sont au moins partiellement enfermées, et facultativement sachant que la première et la deuxième zone de chauffage (201, 205) sont en communication fluidique l'une avec l'autre.

3. Le procédé d'après la revendication 1, sachant que le fait d'exposer l'article (130) à la première zone de chauffage (201) comprend le fait de déplacer l'article (130, 131) vers une première position à l'intérieur de la première zone de chauffage (201) et de déplacer ensuite l'article (130, 131) de la première position vers une deuxième position à l'intérieur de la première zone de chauffage (201).

4. Le procédé d'après la revendication 3, sachant que l'article (130) est situé dans la première position de la première zone de chauffage (201) pendant une durée de 40 secondes à 70 secondes.

5. Le procédé d'après la revendication 1, sachant que l'article (130, 131) est exposé à la première zone de chauffage (201) pendant une première période de temps et à la deuxième zone de chauffage (205) pendant une deuxième période de temps, et sachant que chacune de la première période de temps et de la deuxième période de temps est de 80 secondes à 140 secondes, et facultativement sachant que la première période de temps et la deuxième période de temps sont égales.

6. Le procédé d'après la revendication 1, sachant que, lorsque l'article (130, 131) est exposé à la deuxième zone de chauffage (205), la deuxième zone de chauffage (205) est adaptée pour augmenter la température d'au moins une partie de l'article (130, 131) à un taux ou encore une vitesse (*rate*) réduite par rapport à la vitesse d'augmentation de la température (*rate of temperature increase*) de l'au moins une partie de l'article (130) lorsque l'article (130, 131) est exposé à la première station de chauffage (201).

7. Le procédé d'après la revendication 1, sachant que l'exposition de l'article (130) à une pression supérieure à la pression atmosphérique se produit dans une deuxième zone de refroidissement (400), sachant que la deuxième zone de refroidissement (400) est espacée de la première zone de refroidissement (400), et sachant que la deuxième zone de refroidissement (400) comprend une chambre (410) adaptée pour sceller temporairement l'article (130) de la température et de la pression ambiantes.

8. Le procédé d'après la revendication 1, sachant que l'article (130, 131) comprend au moins un premier composant et un deuxième composant, sachant que lorsque l'article (130, 131) est exposé à la pression supérieure à la pression atmosphérique, l'article présente une température dans une plage de 50 °C à 80 ° C, et facultativement, sachant qu'un liant (*bonding agent*) (820) est présent à une interface entre au moins une partie du premier composant et au moins une partie du deuxième composant.

9. Le procédé d'après la revendication 1, comprenant en outre le fait de comprimer un matériau sur une surface extérieure de l'article (130), et facultativement, sachant que le matériau est un matériau élastomère, sachant que le matériau élastomère présente une température de fusion supérieure à 135 °C.

10. Le procédé d'après la revendication 1, sachant que l'article (130, 131) comprend au moins une partie d'un article chaussant.

11. Un système (100) de thermoformage d'un article, le système (100) comprenant :
une station de chauffage (200) qui est au moins partiellement enfermée, la station de chauffage (200) comprenant une première zone de chauffage (201) et une deuxième zone de chauffage (205), la deuxième zone de chauffage (205) étant en communication fluidique avec la première zone de chauffage (201),
sachant que la première zone de chauffage (201) comprend un ou plusieurs éléments d'énergie thermique (220) et un ou plusieurs premiers dispositifs de circulation d'air (232),
sachant que la deuxième zone de chauffage (205) comprend un ou plusieurs deuxièmes dispositifs de circulation d'air (234),
sachant qu'au moins la première zone de chauffage (201) est adaptée pour exposer au moins un article (130, 131) à une température comprise dans une plage de 70 °C à 250 °C ;
une première station de refroidissement (300) comprenant un ou plusieurs troisièmes dispositifs de circulation d'air (302, 304, 306), la première station de refroidissement (300) étant exposée à la pression atmosphérique ;
une deuxième station de refroidissement (400), la deuxième station de refroidissement (400) comprenant une chambre (410) adaptée pour exposer le au moins un article (130, 131) à une pression supérieure à la pression atmosphérique ; et
un mécanisme de déplacement d'articles (120), le mécanisme de déplacement d'articles (120) étant adapté pour transférer l'au moins un article (130, 131) de la station de chauffage (200) à la première station de refroidissement (300), et étant en outre adapté pour transférer l'au moins un article (130) de la première station de refroidissement (300) à la deuxième station de refroidissement (400).

12. Le système (100) d'après la revendication 11, sachant que la première station de refroidissement (300) est adaptée pour diminuer la température d'au moins une partie de l'au moins un article (130, 131) jusqu'à une plage de 50 °C à 70 °C.

13. Le système (100) d'après la revendication 11, comprenant en outre un ensemble de compression d'article (600), l'ensemble de compression d'article (600) étant adapté pour comprimer un matériau élastomère sur une surface extérieure de l'au moins un article (130) lorsque l'au moins un article (130, 131) est exposé à un ou plusieurs des éléments suivants : la station de chauffage (200), la première station de refroidissement (300), ou la deuxième station de refroidissement (400).

14. Le système (100) d'après la revendication 13, sachant que l'ensemble de compression d'article (600) est couplé à un système de génération de pression négative (100), sachant que l'ensemble de compression d'article (600) est adapté pour comprimer le matériau élastomère sur la surface extérieure de l'au moins un article (130) en exposant la surface extérieure de l'au moins un article (130) et une surface intérieure du matériau élastomère à une pression inférieure à la pression atmosphérique.

15. Le système (100) d'après la revendication 13, sachant que l'ensemble de compression d'article (600) est adapté pour être couplé à une forme (*last*), et facultativement sachant que l'article comprend au moins une partie d'un article chaussant.
